# EUROPEAN PATENT APPLICATION

(11) **EP 4 783 507 A1**
(43) Date of publication of application: **29.07.2026**
(21) Application number: 24868630.5
(22) Date of filing: 13.09.2024
(51) Int. Cl.: H04L 5/00, H04W 8/24, H04W 74/00, H04W 24/08

(54) **CA-BASED COMMUNICATION**

(30) Priority: 21.09.2023 US 202363539600 P
(71) Applicant: LG Electronics Inc., Yeongdeungpo-gu Seoul 07336 (KR)
(72) Inventor: HWANG, Jinyup, Seoul 06772 (KR); YANG, Yoonoh, Seoul 06772 (KR); LEE, Sangwook, Seoul 06772 (KR); HUH, Joongkwan, Seoul 06772 (KR); NA, Yunsik, Seoul 06772 (KR); CHI, Junggeun, Seoul 06772 (KR)
(74) Representative: Frenkel, Matthias Alexander
(86) International application number: PCT/KR2024/014010
(87) International publication number: WO 2025/063653

(57) **Abstract**

An embodiment described in the present disclosure provides a method. The method may comprise the steps of: transmitting a random access preamble to a serving cell; receiving a response message from the serving cell; transmitting, to the serving cell, capability information indicating that simultaneous reception and transmission are possible; receiving an SCell activation command message from the serving cell; and transmitting, to the serving cell, a message including information related to whether simultaneous reception is possible for the serving cell and SCell.

## Description

### TECHNICAL FIELD

The present disclosure relates to a radio communication.

### BACKGROUND ART

3rd generation partnership project (3GPP) long-term evolution (LTE) is a technology for enabling high-speed packet communications. Many schemes have been proposed for the LTE objective including those that aim to reduce user and provider costs, improve service quality, and expand and improve coverage and system capacity. The 3GPP LTE requires reduced cost per bit, increased service availability, flexible use of a frequency band, a simple structure, an open interface, and adequate power consumption of a terminal as an upper-level requirement.

Work has started in international telecommunication union (ITU) and 3GPP to develop requirements and specifications for new radio (NR) systems. 3GPP has to identify and develop the technology components needed for successfully standardizing the new RAT timely satisfying both the urgent market needs, and the more long-term requirements set forth by the ITU radio communication sector (ITU-R) international mobile telecommunications (IMT)-2020 process. Further, the NR should be able to use any spectrum band ranging at least up to 110 GHz that may be made available for wireless communications even in a more distant future.

The NR targets a single technical framework addressing all usage scenarios, requirements and deployment scenarios including enhanced mobile broadband (eMBB), massive machine-type-communications (mMTC), ultra-reliable and low latency communications (URLLC), etc. The NR shall be inherently forward compatible.

Intra-band carrier aggregation (CA) may be supported. However, according to the related art, there is a problem in that communication based on intra-band CA is not supported when a primary cell (PCell) and a secondary cell (SCell) are non-co-located.

### DISCLOSURE

### TECHNICAL SOLUTION

In one aspect, a method for a user equipment (UE) to perform communication is provided. The method may include: transmitting a random access preamble to a serving cell; receiving a response message from the serving cell; transmitting, to the serving cell, capability information related to that simultaneous reception and transmission are possible; receiving an SCell activation command message from the serving cell; and transmitting, to the serving cell, a message including information related to whether simultaneous reception for the serving cell and the SCell is possible.

In another aspect, an apparatus for implementing the method is provided.

In one aspect, a method is provided. The method may include: receiving a random access preamble from a user equipment (UE); transmitting a response message to the UE; receiving, from the UE, capability information related to that simultaneous reception and transmission are possible; transmitting an SCell activation command message to the UE; and receiving, from the UE, a message including information related to whether simultaneous reception for a serving cell and the SCell is possible.

In another aspect, an apparatus for implementing the method is provided.

### BRIEF DESCRIPTION OF THE DRAWINGS

FIG. 1 shows an example of a communication system to which implementations of the present disclosure is applied.
FIG. 2 shows an example of wireless devices to which implementations of the present disclosure is applied.
FIG. 3 shows an example of a wireless device to which implementations of the present disclosure is applied.
FIG. 4 is a diagram showing an example of a communication structure that can be provided in a 6G system.
FIG. 5 shows an example of an electromagnetic spectrum.
FIGS. 6a to 6e are examples of RACH procedures applicable to one embodiment of the disclosure.
FIGS. 7a and 7b illustrate examples of a co-located scenario and a non-co-located scenario of a PCell and an SCell, according to an embodiment of the present disclosure.
FIG. 8 illustrates a first example of a procedure according to an embodiment of the present disclosure.
FIG. 9 illustrates a second example of a procedure according to an embodiment of the present disclosure.
FIG. 10 illustrates a third example of a procedure according to an embodiment of the present disclosure.
FIG. 11 illustrates a fourth example of a procedure according to an embodiment of the present disclosure.
FIG. 12 illustrates an example of a procedure according to an embodiment of the present disclosure.

### MODE FOR INVENTION

The following techniques, apparatuses, and systems may be applied to a variety of wireless multiple access systems. Examples of the multiple access systems include a code division multiple access (CDMA) system, a frequency division multiple access (FDMA) system, a time division multiple access (TDMA) system, an orthogonal frequency division multiple access (OFDMA) system, a single carrier frequency division multiple access (SC-FDMA) system, and a multicarrier frequency division multiple access (MC-FDMA) system. CDMA may be embodied through radio technology such as universal terrestrial radio access (UTRA) or CDMA2000. TDMA may be embodied through radio technology such as global system for mobile communications (GSM), general packet radio service (GPRS), or enhanced data rates for GSM evolution (EDGE). OFDMA may be embodied through radio technology such as institute of electrical and electronics engineers (IEEE) 802.11 (Wi-Fi), IEEE 802.16 (WiMAX), IEEE 802.20, or evolved UTRA (E-UTRA). UTRA is a part of a universal mobile telecommunications system (UMTS). 3rd generation partnership project (3GPP) long term evolution (LTE) is a part of evolved UMTS (E-UMTS) using E-UTRA. 3GPP LTE employs OFDMA in DL and SC-FDMA in UL.

The following techniques, devices, and systems may be applied to various wireless multiple access systems. Examples of multiple access systems include CDMA (code division multiple access) systems, FDMA (frequency division multiple access) systems, TDMA (time division multiple access) systems, OFDMA (orthogonal frequency division multiple access) systems, SC-FDMA (single carrier frequency division multiple access) systems, and MC-FDMA (multicarrier frequency division multiple access) systems. CDMA can be implemented using wireless technologies such as UTRA (universal terrestrial radio access) or CDMA2000. TDMA can be implemented using wireless technologies such as GSM (global system for mobile communications), GPRS (general packet radio service), or EDGE (enhanced data rates for GSM evolution). OFDMA can be implemented through wireless technologies such as IEEE (Institute of Electrical and Electronics Engineers) 802.11 (Wi-Fi), IEEE 802.16 (WiMAX), IEEE 802.20, or E-UTRA (evolved UTRA). UTRA is part of UMTS (Universal Mobile Telecommunications System). 3GPP (3rd Generation Partnership Project) LTE (Long-Term Evolution) is part of E-UMTS (Evolved UMTS) using E-UTRA. 3GPP LTE uses OFDMA for the downlink (DL) and SC-FDMA for the uplink (UL). The evolution of 3GPP LTE includes LTE-A (advanced), LTE-A Pro, and/or 5G NR (new radio).

For convenience of description, implementations of the present disclosure are mainly described in regards to a 3GPP based wireless communication system. However, the technical features of the present disclosure are not limited thereto. For example, although the following detailed description is given based on a mobile communication system corresponding to a 3GPP based wireless communication system, aspects of the present disclosure that are not limited to 3GPP based wireless communication system are applicable to other mobile communication systems.

For terms and technologies which are not specifically described among the terms of and technologies employed in the present disclosure, the wireless communication standard documents published before the present disclosure may be referenced.

In the present disclosure, "A or B" may mean "only A", "only B", or "both A and B". In other words, "A or B" in the present disclosure may be interpreted as "A and/or B". For example, "A, B or C" in the present disclosure may mean "only A", "only B", "only C", or "any combination of A, B and C".

In the present disclosure, slash (/) or comma (,) may mean "and/or". For example, "A/B" may mean "A and/or B". Accordingly, "A/B" may mean "only A", "only B", or "both A and B". For example, "A, B, C" may mean "A, B or C".

In the present disclosure, "at least one of A and B" may mean "only A", "only B" or "both A and B". In addition, the expression "at least one of A or B" or "at least one of A and/or B" in the present disclosure may be interpreted as same as "at least one of A and B".

In addition, in the present disclosure, "at least one of A, B and C" may mean "only A", "only B", "only C", or "any combination of A, B and C". In addition, "at least one of A, B or C" or "at least one of A, B and/or C" may mean "at least one of A, B and C".

Also, parentheses used in the present disclosure may mean "for example". In detail, when it is shown as "control information (PDCCH)", "PDCCH" may be proposed as an example of "control information". In other words, "control information" in the present disclosure is not limited to "PDCCH", and "PDCCH" may be proposed as an example of "control information". In addition, even when shown as "control information (i.e., PDCCH)", "PDCCH" may be proposed as an example of "control information".

Technical features that are separately described in one drawing in the present disclosure may be implemented separately or simultaneously.

Although not limited thereto, various descriptions, functions, procedures, suggestions, methods and/or operational flowcharts of the present disclosure disclosed herein can be applied to various fields requiring wireless communication and/or connection (e.g., 5G) between devices.

Hereinafter, the present disclosure will be described in more detail with reference to drawings. The same reference numerals in the following drawings and/or descriptions may refer to the same and/or corresponding hardware blocks, software blocks, and/or functional blocks unless otherwise indicated.

Although a user equipment (UE) is illustrated by way of example in the accompanying drawings, the illustrated UE may be referred to as a terminal, mobile equipment (ME), and the like. In addition, the UE may be a portable device such as a notebook computer, a mobile phone, a PDA, a smartphone, and a multimedia device or may be a non-portable device such as a PC or a vehicle-mounted device.

Hereinafter, a UE is used as an example of a wireless communication device (or a wireless device or wireless equipment) capable of wireless communication. An operation performed by a UE may be performed by a wireless communication device. A wireless communication device may also be referred to as a wireless device, wireless equipment, or the like.

A base station used below generally refers to a fixed station communicating with a wireless device and may also be referred as an evolved-NodeB (eNodeB), an evolved-NodeB (eNB), a base transceiver system (BTS), an access point, and a next generation NodeB (gNB).

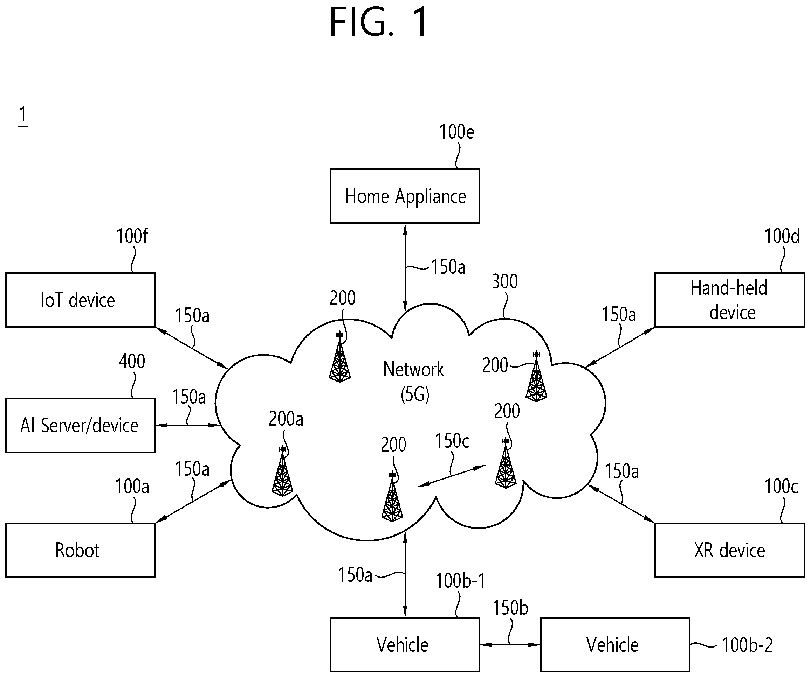

FIG. 1 shows an example of a communication system to which implementations of the present disclosure is applied.

The 5G usage scenarios shown in FIG. 1 are only exemplary, and the technical features of the present disclosure can be applied to other 5G usage scenarios which are not shown in FIG. 1.

Three main requirement categories for 5G include (1) a category of enhanced mobile broadband (eMBB), (2) a category of massive machine type communication (mMTC), and (3) a category of ultra-reliable and low latency communications (URLLC).

Partial use cases may require a plurality of categories for optimization and other use cases may focus only upon one key performance indicator (KPI). 5G supports such various use cases using a flexible and reliable method.

eMBB far surpasses basic mobile Internet access and covers abundant bidirectional work and media and entertainment applications in cloud and augmented reality. Data is one of 5G core motive forces and, in a 5G era, a dedicated voice service may not be provided for the first time. In 5G, it is expected that voice will be simply processed as an application program using data connection provided by a communication system. Main causes for increased traffic volume are due to an increase in the size of content and an increase in the number of applications requiring high data transmission rate. A streaming service (of audio and video), conversational video, and mobile Internet access will be more widely used as more devices are connected to the Internet. These many application programs require connectivity of an always turned-on state in order to push real-time information and alarm for users. Cloud storage and applications are rapidly increasing in a mobile communication platform and may be applied to both work and entertainment. The cloud storage is a special use case which accelerates growth of uplink data transmission rate. 5G is also used for remote work of cloud. When a tactile interface is used, 5G demands much lower end-to-end latency to maintain user good experience. Entertainment, for example, cloud gaming and video streaming, is another core element which increases demand for mobile broadband capability. Entertainment is essential for a smartphone and a tablet in any place including high mobility environments such as a train, a vehicle, and an airplane. Other use cases are augmented reality for entertainment and information search. In this case, the augmented reality requires very low latency and instantaneous data volume.

In addition, one of the most expected 5G use cases relates a function capable of smoothly connecting embedded sensors in all fields, i.e., mMTC. It is expected that the number of potential Internet-of-things (IoT) devices will reach 204 hundred million up to the year of 2020. An industrial IoT is one of categories of performing a main role enabling a smart city, asset tracking, smart utility, agriculture, and security infrastructure through 5G.

URLLC includes a new service that will change industry through remote control of main infrastructure and an ultra-reliable/available low-latency link such as a self-driving vehicle. A level of reliability and latency is essential to control a smart grid, automatize industry, achieve robotics, and control and adjust a drone.

5G is a means of providing streaming evaluated as a few hundred megabits per second to gigabits per second and may complement fiber-to-the-home (FTTH) and cable-based broadband (or DOCSIS). Such fast speed is needed to deliver TV in resolution of 4K or more (6K, 8K, and more), as well as virtual reality and augmented reality. Virtual reality (VR) and augmented reality (AR) applications include almost immersive sports games. A specific application program may require a special network configuration. For example, for VR games, gaming companies need to incorporate a core server into an edge network server of a network operator in order to minimize latency.

Automotive is expected to be a new important motivated force in 5G together with many use cases for mobile communication for vehicles. For example, entertainment for passengers requires high simultaneous capacity and mobile broadband with high mobility. This is because future users continue to expect connection of high quality regardless of their locations and speeds. Another use case of an automotive field is an AR dashboard. The AR dashboard causes a driver to identify an object in the dark in addition to an object seen from a front window and displays a distance from the object and a movement of the object by overlapping information talking to the driver. In the future, a wireless module enables communication between vehicles, information exchange between a vehicle and supporting infrastructure, and information exchange between a vehicle and other connected devices (e.g., devices accompanied by a pedestrian). A safety system guides alternative courses of a behavior so that a driver may drive more safely drive, thereby lowering the danger of an accident. The next stage will be a remotely controlled or self-driven vehicle. This requires very high reliability and very fast communication between different self-driven vehicles and between a vehicle and infrastructure. In the future, a self-driven vehicle will perform all driving activities and a driver will focus only upon abnormal traffic that the vehicle cannot identify. Technical requirements of a self-driven vehicle demand ultra-low latency and ultra-high reliability so that traffic safety is increased to a level that cannot be achieved by human being.

A smart city and a smart home/building mentioned as a smart society will be embedded in a high-density wireless sensor network. A distributed network of an intelligent sensor will identify conditions for costs and energy-efficient maintenance of a city or a home. Similar configurations may be performed for respective households. All of temperature sensors, window and heating controllers, burglar alarms, and home appliances are wirelessly connected. Many of these sensors are typically low in data transmission rate, power, and cost. However, real-time HD video may be demanded by a specific type of device to perform monitoring.

Consumption and distribution of energy including heat or gas is distributed at a higher level so that automated control of the distribution sensor network is demanded. The smart grid collects information and connects the sensors to each other using digital information and communication technology so as to act according to the collected information. Since this information may include behaviors of a supply company and a consumer, the smart grid may improve distribution of fuels such as electricity by a method having efficiency, reliability, economic feasibility, production sustainability, and automation. The smart grid may also be regarded as another sensor network having low latency.

Mission critical application (e.g., e-health) is one of 5G use scenarios. A health part contains many application programs capable of enjoying benefit of mobile communication. A communication system may support remote treatment that provides clinical treatment in a faraway place. Remote treatment may aid in reducing a barrier against distance and improve access to medical services that cannot be continuously available in a faraway rural area. Remote treatment is also used to perform important treatment and save lives in an emergency situation. The wireless sensor network based on mobile communication may provide remote monitoring and sensors for parameters such as heart rate and blood pressure.

Wireless and mobile communication gradually becomes important in the field of an industrial application. Wiring is high in installation and maintenance cost. Therefore, a possibility of replacing a cable with reconstructible wireless links is an attractive opportunity in many industrial fields. However, in order to achieve this replacement, it is necessary for wireless connection to be established with latency, reliability, and capacity similar to those of the cable and management of wireless connection needs to be simplified. Low latency and a very low error probability are new requirements when connection to 5G is needed.

Logistics and freight tracking are important use cases for mobile communication that enables inventory and package tracking anywhere using a location-based information system. The use cases of logistics and freight typically demand low data rate but require location information with a wide range and reliability.

Referring to FIG. 1, the communication system 1 includes wireless devices 100a to 100f, base stations (BSs) 200, and a network 300. Although FIG. 1 illustrates a 5G network as an example of the network of the communication system 1, the implementations of the present disclosure are not limited to the 5G system, and can be applied to the future communication system beyond the 5G system.

The BSs 200 and the network 300 may be implemented as wireless devices and a specific wireless device may operate as a BS/network node with respect to other wireless devices.

The wireless devices 100a to 100f represent devices performing communication using radio access technology (RAT) (e.g., 5G new RAT (NR)) or LTE) and may be referred to as communication/radio/5G devices. The wireless devices 100a to 100f may include, without being limited to, a robot 100a, vehicles 100b-1 and 100b-2, an extended reality (XR) device 100c, a hand-held device 100d, a home appliance 100e, an IoT device 100f, and an artificial intelligence (AI) device/server 400. For example, the vehicles may include a vehicle having a wireless communication function, an autonomous driving vehicle, and a vehicle capable of performing communication between vehicles. The vehicles may include an unmanned aerial vehicle (UAV) (e.g., a drone). The XR device may include an AR/VR/Mixed Reality (MR) device and may be implemented in the form of a head-mounted device (HMD), a head-up display (HUD) mounted in a vehicle, a television, a smartphone, a computer, a wearable device, a home appliance device, a digital signage, a vehicle, a robot, etc. The hand-held device may include a smartphone, a smartpad, a wearable device (e.g., a smartwatch or a smartglasses), and a computer (e.g., a notebook). The home appliance may include a TV, a refrigerator, and a washing machine. The IoT device may include a sensor and a smartmeter.

In the present disclosure, the wireless devices 100a to 100f may be called user equipments (UEs). A UE may include, for example, a cellular phone, a smartphone, a laptop computer, a digital broadcast terminal, a personal digital assistant (PDA), a portable multimedia player (PMP), a navigation system, a slate personal computer (PC), a tablet PC, an ultrabook, a vehicle, a vehicle having an autonomous traveling function, a connected car, an UAV, an AI module, a robot, an AR device, a VR device, an MR device, a hologram device, a public safety device, an MTC device, an IoT device, a medical device, a FinTech device (or a financial device), a security device, a weather/environment device, a device related to a 5G service, or a device related to a fourth industrial revolution field.

The UAV may be, for example, an aircraft aviated by a wireless control signal without a human being onboard.

The VR device may include, for example, a device for implementing an object or a background of the virtual world. The AR device may include, for example, a device implemented by connecting an object or a background of the virtual world to an object or a background of the real world. The MR device may include, for example, a device implemented by merging an object or a background of the virtual world into an object or a background of the real world. The hologram device may include, for example, a device for implementing a stereoscopic image of 360 degrees by recording and reproducing stereoscopic information, using an interference phenomenon of light generated when two laser lights called holography meet.

The public safety device may include, for example, an image relay device or an image device that is wearable on the body of a user.

The MTC device and the IoT device may be, for example, devices that do not require direct human intervention or manipulation. For example, the MTC device and the IoT device may include smartmeters, vending machines, thermometers, smartbulbs, door locks, or various sensors.

The medical device may be, for example, a device used for the purpose of diagnosing, treating, relieving, curing, or preventing disease. For example, the medical device may be a device used for the purpose of diagnosing, treating, relieving, or correcting injury or impairment. For example, the medical device may be a device used for the purpose of inspecting, replacing, or modifying a structure or a function. For example, the medical device may be a device used for the purpose of adjusting pregnancy. For example, the medical device may include a device for treatment, a device for operation, a device for (in vitro) diagnosis, a hearing aid, or a device for procedure.

The security device may be, for example, a device installed to prevent a danger that may arise and to maintain safety. For example, the security device may be a camera, a closed-circuit TV (CCTV), a recorder, or a black box.

The FinTech device may be, for example, a device capable of providing a financial service such as mobile payment. For example, the FinTech device may include a payment device or a point of sales (POS) system.

The weather/environment device may include, for example, a device for monitoring or predicting a weather/environment.

The wireless devices 100a to 100f may be connected to the network 300 via the BSs 200. An AI technology may be applied to the wireless devices 100a to 100f and the wireless devices 100a to 100f may be connected to the AI server 400 via the network 300. The network 300 may be configured using a 3G network, a 4G (e.g., LTE) network, a 5G (e.g., NR) network, and a beyond-5G network. Although the wireless devices 100a to 100f may communicate with each other through the BSs 200/network 300, the wireless devices 100a to 100f may perform direct communication (e.g., sidelink communication) with each other without passing through the BSs 200/network 300. For example, the vehicles 100b-1 and 100b-2 may perform direct communication (e.g., vehicle-to-vehicle (V2V)/vehicle-to-everything (V2X) communication). The IoT device (e.g., a sensor) may perform direct communication with other IoT devices (e.g., sensors) or other wireless devices 100a to 100f.

Wireless communication/connections 150a, 150b and 150c may be established between the wireless devices 100a to 100f and/or between wireless device 100a to 100f and BS 200 and/or between BSs 200. Herein, the wireless communication/connections may be established through various RATs (e.g., 5G NR) such as uplink/downlink communication 150a, sidelink communication (or device-to-device (D2D) communication) 150b, inter-base station communication 150c (e.g., relay, integrated access and backhaul (IAB)), etc. The wireless devices 100a to 100f and the BSs 200/the wireless devices 100a to 100f may transmit/receive radio signals to/from each other through the wireless communication/connections 150a, 150b and 150c. For example, the wireless communication/connections 150a, 150b and 150c may transmit/receive signals through various physical channels. To this end, at least a part of various configuration information configuring processes, various signal processing processes (e.g., channel encoding/decoding, modulation/demodulation, and resource mapping/de-mapping), and resource allocating processes, for transmitting/receiving radio signals, may be performed based on the various proposals of the present disclosure.

AI refers to the field of studying artificial intelligence or the methodology that can create it, and machine learning refers to the field of defining various problems addressed in the field of AI and the field of methodology to solve them. Machine learning is also defined as an algorithm that increases the performance of a task through steady experience on a task.

Robot means a machine that automatically processes or operates a given task by its own ability. In particular, robots with the ability to recognize the environment and make self-determination to perform actions can be called intelligent robots. Robots can be classified as industrial, medical, home, military, etc., depending on the purpose or area of use. The robot can perform a variety of physical operations, such as moving the robot joints with actuators or motors. The movable robot also includes wheels, brakes, propellers, etc., on the drive, allowing it to drive on the ground or fly in the air.

Autonomous driving means a technology that drives on its own, and autonomous vehicles mean vehicles that drive without user's control or with minimal user's control. For example, autonomous driving may include maintaining lanes in motion, automatically adjusting speed such as adaptive cruise control, automatic driving along a set route, and automatically setting a route when a destination is set. The vehicle covers vehicles equipped with internal combustion engines, hybrid vehicles equipped with internal combustion engines and electric motors, and electric vehicles equipped with electric motors, and may include trains, motorcycles, etc., as well as cars. Autonomous vehicles can be seen as robots with autonomous driving functions.

Extended reality is collectively referred to as VR, AR, and MR. VR technology provides objects and backgrounds of real world only through computer graphic (CG) images. AR technology provides a virtual CG image on top of a real object image. MR technology is a CG technology that combines and combines virtual objects into the real world. MR technology is similar to AR technology in that they show real and virtual objects together. However, there is a difference in that in AR technology, virtual objects are used as complementary forms to real objects, while in MR technology, virtual objects and real objects are used as equal personalities.

NR supports multiples numerologies (and/or multiple subcarrier spacings (SCS)) to support various 5G services. For example, if SCS is 15 kHz, wide area can be supported in traditional cellular bands, and if SCS is 30 kHz/60 kHz, dense-urban, lower latency, and wider carrier bandwidth can be supported. If SCS is 60 kHz or higher, bandwidths greater than 24.25 GHz can be supported to overcome phase noise.

The NR frequency band may be defined as two types of frequency range, i.e., FR1 and FR2. The numerical value of the frequency range may be changed. For example, the frequency ranges of the two types (FR1 and FR2) may be as shown in Table 1 below. For ease of explanation, in the frequency ranges used in the NR system, FR1 may mean "sub 6 GHz range", FR2 may mean "above 6 GHz range," and may be referred to as millimeter wave (mmW). FR2 may include FR 2-1 and FR 2-2, as shown in the examples in Table 1 and Table 2.

**[Table 1]**

| Frequency Range designation | | Corresponding frequency range | Subcarrier Spacing |
|---|---|---|---|
| FR1 | | 450MHz - 6000MHz | 15, 30, 60kHz |
| FR2 | FR2-1 | 24250MHz - 52600MHz | 60, 120, 240kHz |
| | FR2-2 | 57000MHz - 71000MHz | 120, 480, 960kHz |

As mentioned above, the numerical value of the frequency range of the NR system may be changed. For example, FR1 may include a frequency band of 410MHz to 7125MHz as shown in Table 2 below. That is, FR1 may include a frequency band of 6GHz (or 5850, 5900, 5925 MHz, etc.) or more. For example, a frequency band of 6 GHz (or 5850, 5900, 5925 MHz, etc.) or more included in FR1 may include an unlicensed band. Unlicensed bands may be used for a variety of purposes, for example for communication for vehicles (e.g., autonomous driving).

**[Table 2]**

| Frequency Range designation | | Corresponding frequency range | Subcarrier Spacing |
|---|---|---|---|
| FR1 | | 410MHz - 7125MHz | 15, 30, 60kHz |
| FR2 | FR2-1 | 24250MHz - 52600MHz | 60, 120, 240kHz |
| | FR2-2 | 57000MHz - 71000MHz | 120, 480, 960kHz |

Here, the radio communication technologies implemented in the wireless devices in the present disclosure may include narrowband internet-of-things (NB-IoT) technology for low-power communication as well as LTE, NR and 6G. For example, NB-IoT technology may be an example of low power wide area network (LPWAN) technology, may be implemented in specifications such as LTE Cat NB1 and/or LTE Cat NB2, and may not be limited to the above-mentioned names. Additionally, and/or alternatively, the radio communication technologies implemented in the wireless devices in the present disclosure may communicate based on LTE-M technology. For example, LTE-M technology may be an example of LPWAN technology and be called by various names such as enhanced machine type communication (eMTC). For example, LTE-M technology may be implemented in at least one of the various specifications, such as 1) LTE Cat 0, 2) LTE Cat M1, 3) LTE Cat M2, 4) LTE non-bandwidth limited (non-BL), 5) LTE-MTC, 6) LTE Machine Type Communication, and/or 7) LTE M, and may not be limited to the above-mentioned names. Additionally, and/or alternatively, the radio communication technologies implemented in the wireless devices in the present disclosure may include at least one of ZigBee, Bluetooth, and/or LPWAN which take into account low-power communication, and may not be limited to the above-mentioned names. For example, ZigBee technology may generate personal area networks (PANs) related to small/low-power digital communication based on various specifications such as IEEE 802.15.4 and may be called various names.

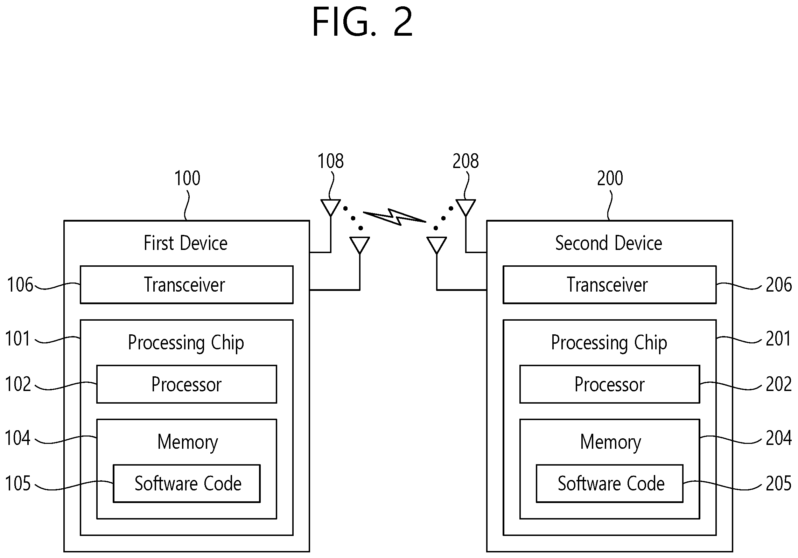

FIG. 2 shows an example of wireless devices to which implementations of the present disclosure is applied.

Referring to FIG. 2, a first wireless device 100 and a second wireless device 200 may transmit/receive radio signals to/from an external device through a variety of RATs (e.g., LTE and NR).

In FIG. 2, {the first wireless device 100 and the second wireless device 200} may correspond to at least one of {the wireless device 100a to 100f and the BS 200}, {the wireless device 100a to 100f and the wireless device 100a to 100f} and/or {the BS 200 and the BS 200} of FIG. 1.

The first wireless device 100 may include at least one transceiver, such as a transceiver 106, at least one processing chip, such as a processing chip 101, and/or one or more antennas 108.

The processing chip 101 may include at least one processor, such a processor 102, and at least one memory, such as a memory 104. It is exemplarily shown in FIG. 2 that the memory 104 is included in the processing chip 101. Additional and/or alternatively, the memory 104 may be placed outside of the processing chip 101.

The processor 102 may control the memory 104 and/or the transceiver 106 and may be configured to implement the descriptions, functions, procedures, suggestions, methods and/or operational flowcharts described in the present disclosure. For example, the processor 102 may process information within the memory 104 to generate first information/signals and then transmit radio signals including the first information/signals through the transceiver 106. The processor 102 may receive radio signals including second information/signals through the transceiver 106 and then store information obtained by processing the second information/signals in the memory 104.

The memory 104 may be operably connectable to the processor 102. The memory 104 may store various types of information and/or instructions. The memory 104 may store a software code 105 which implements instructions that, when executed by the processor 102, perform the descriptions, functions, procedures, suggestions, methods and/or operational flowcharts disclosed in the present disclosure. For example, the software code 105 may implement instructions that, when executed by the processor 102, perform the descriptions, functions, procedures, suggestions, methods and/or operational flowcharts disclosed in the present disclosure. For example, the software code 105 may control the processor 102 to perform one or more protocols. For example, the software code 105 may control the processor 102 to perform one or more layers of the radio interface protocol.

Herein, the processor 102 and the memory 104 may be a part of a communication modem/circuit/chip designed to implement RAT (e.g., LTE or NR). The transceiver 106 may be connected to the processor 102 and transmit and/or receive radio signals through one or more antennas 108. Each of the transceiver 106 may include a transmitter and/or a receiver. The transceiver 106 may be interchangeably used with radio frequency (RF) unit(s). In the present disclosure, the first wireless device 100 may represent a communication modem/circuit/chip.

The second wireless device 200 may include at least one transceiver, such as a transceiver 206, at least one processing chip, such as a processing chip 201, and/or one or more antennas 208.

The processing chip 201 may include at least one processor, such a processor 202, and at least one memory, such as a memory 204. It is exemplarily shown in FIG. 2 that the memory 204 is included in the processing chip 201. Additional and/or alternatively, the memory 204 may be placed outside of the processing chip 201.

The processor 202 may control the memory 204 and/or the transceiver 206 and may be configured to implement the descriptions, functions, procedures, suggestions, methods and/or operational flowcharts described in the present disclosure. For example, the processor 202 may process information within the memory 204 to generate third information/signals and then transmit radio signals including the third information/signals through the transceiver 206. The processor 202 may receive radio signals including fourth information/signals through the transceiver 206 and then store information obtained by processing the fourth information/signals in the memory 204.

The memory 204 may be operably connectable to the processor 202. The memory 204 may store various types of information and/or instructions. The memory 204 may store a software code 205 which implements instructions that, when executed by the processor 202, perform the descriptions, functions, procedures, suggestions, methods and/or operational flowcharts disclosed in the present disclosure. For example, the software code 205 may implement instructions that, when executed by the processor 202, perform the descriptions, functions, procedures, suggestions, methods and/or operational flowcharts disclosed in the present disclosure. For example, the software code 205 may control the processor 202 to perform one or more protocols. For example, the software code 205 may control the processor 202 to perform one or more layers of the radio interface protocol.

Herein, the processor 202 and the memory 204 may be a part of a communication modem/circuit/chip designed to implement RAT (e.g., LTE or NR). The transceiver 206 may be connected to the processor 202 and transmit and/or receive radio signals through one or more antennas 208. Each of the transceiver 206 may include a transmitter and/or a receiver. The transceiver 206 may be interchangeably used with RF unit. In the present disclosure, the second wireless device 200 may represent a communication modem/circuit/chip.

Hereinafter, hardware elements of the wireless devices 100 and 200 will be described more specifically. One or more protocol layers may be implemented by, without being limited to, one or more processors 102 and 202. For example, the one or more processors 102 and 202 may implement one or more layers (e.g., functional layers such as physical (PHY) layer, media access control (MAC) layer, radio link control (RLC) layer, packet data convergence protocol (PDCP) layer, radio resource control (RRC) layer, and service data adaptation protocol (SDAP) layer). The one or more processors 102 and 202 may generate one or more protocol data units (PDUs) and/or one or more service data unit (SDUs) according to the descriptions, functions, procedures, suggestions, methods and/or operational flowcharts disclosed in the present disclosure. The one or more processors 102 and 202 may generate messages, control information, data, or information according to the descriptions, functions, procedures, suggestions, methods and/or operational flowcharts disclosed in the present disclosure. The one or more processors 102 and 202 may generate signals (e.g., baseband signals) including PDUs, SDUs, messages, control information, data, or information according to the descriptions, functions, procedures, suggestions, methods and/or operational flowcharts disclosed in the present disclosure and provide the generated signals to the one or more transceivers 106 and 206. The one or more processors 102 and 202 may receive the signals (e.g., baseband signals) from the one or more transceivers 106 and 206 and acquire the PDUs, SDUs, messages, control information, data, or information according to the descriptions, functions, procedures, suggestions, methods and/or operational flowcharts disclosed in the present disclosure.

The one or more processors 102 and 202 may be referred to as controllers, microcontrollers, microprocessors, or microcomputers. The one or more processors 102 and 202 may be implemented by hardware, firmware, software, or a combination thereof. As an example, one or more application specific integrated circuits (ASICs), one or more digital signal processors (DSPs), one or more digital signal processing devices (DSPDs), one or more programmable logic devices (PLDs), or one or more field programmable gate arrays (FPGAs) may be included in the one or more processors 102 and 202. The descriptions, functions, procedures, suggestions, methods and/or operational flowcharts disclosed in the present disclosure may be implemented using firmware or software and the firmware or software may be configured to include the modules, procedures, or functions. Firmware or software configured to perform the descriptions, functions, procedures, suggestions, methods and/or operational flowcharts disclosed in the present disclosure may be included in the one or more processors 102 and 202 or stored in the one or more memories 104 and 204 so as to be driven by the one or more processors 102 and 202. The descriptions, functions, procedures, suggestions, methods and/or operational flowcharts disclosed in the present disclosure may be implemented using firmware or software in the form of code, commands, and/or a set of commands.

The one or more memories 104 and 204 may be connected to the one or more processors 102 and 202 and store various types of data, signals, messages, information, programs, code, instructions, and/or commands. The one or more memories 104 and 204 may be configured by read-only memories (ROMs), random access memories (RAMs), electrically erasable programmable read-only memories (EPROMs), flash memories, hard drives, registers, cash memories, computer-readable storage media, and/or combinations thereof. The one or more memories 104 and 204 may be located at the interior and/or exterior of the one or more processors 102 and 202. The one or more memories 104 and 204 may be connected to the one or more processors 102 and 202 through various technologies such as wired or wireless connection.

The one or more transceivers 106 and 206 may transmit user data, control information, and/or radio signals/channels, mentioned in the descriptions, functions, procedures, suggestions, methods and/or operational flowcharts disclosed in the present disclosure, to one or more other devices. The one or more transceivers 106 and 206 may receive user data, control information, and/or radio signals/channels, mentioned in the descriptions, functions, procedures, suggestions, methods and/or operational flowcharts disclosed in the present disclosure, from one or more other devices. For example, the one or more transceivers 106 and 206 may be connected to the one or more processors 102 and 202 and transmit and receive radio signals. For example, the one or more processors 102 and 202 may perform control so that the one or more transceivers 106 and 206 may transmit user data, control information, or radio signals to one or more other devices. The one or more processors 102 and 202 may perform control so that the one or more transceivers 106 and 206 may receive user data, control information, or radio signals from one or more other devices.

The one or more transceivers 106 and 206 may be connected to the one or more antennas 108 and 208 and the one or more transceivers 106 and 206 may be configured to transmit and receive user data, control information, and/or radio signals/channels, mentioned in the descriptions, functions, procedures, suggestions, methods and/or operational flowcharts disclosed in the present disclosure, through the one or more antennas 108 and 208. In the present disclosure, the one or more antennas 108 and 208 may be a plurality of physical antennas or a plurality of logical antennas (e.g., antenna ports).

The one or more transceivers 106 and 206 may convert received user data, control information, radio signals/channels, etc., from RF band signals into baseband signals in order to process received user data, control information, radio signals/channels, etc., using the one or more processors 102 and 202. The one or more transceivers 106 and 206 may convert the user data, control information, radio signals/channels, etc., processed using the one or more processors 102 and 202 from the base band signals into the RF band signals. To this end, the one or more transceivers 106 and 206 may include (analog) oscillators and/or filters. For example, the one or more transceivers 106 and 206 can up-convert OFDM baseband signals to OFDM signals by their (analog) oscillators and/or filters under the control of the one or more processors 102 and 202 and transmit the up-converted OFDM signals at the carrier frequency. The one or more transceivers 106 and 206 may receive OFDM signals at a carrier frequency and downconvert the OFDM signals into OFDM baseband signals by their (analog) oscillators and/or filters under the control of the one or more processors 102 and 202.

In the implementations of the present disclosure, a UE may operate as a transmitting device in uplink (UL) and as a receiving device in downlink (DL). In the implementations of the present disclosure, a BS may operate as a receiving device in UL and as a transmitting device in DL. Hereinafter, for convenience of description, it is mainly assumed that the first wireless device 100 acts as the UE, and the second wireless device 200 acts as the BS. For example, the processor(s) 102 connected to, mounted on or launched in the first wireless device 100 may be configured to perform the UE behavior according to an implementation of the present disclosure or control the transceiver(s) 106 to perform the UE behavior according to an implementation of the present disclosure. The processor(s) 202 connected to, mounted on or launched in the second wireless device 200 may be configured to perform the BS behavior according to an implementation of the present disclosure or control the transceiver(s) 206 to perform the BS behavior according to an implementation of the present disclosure.

In the present disclosure, a BS is also referred to as a node B (NB), an eNode B (eNB), or a gNB.

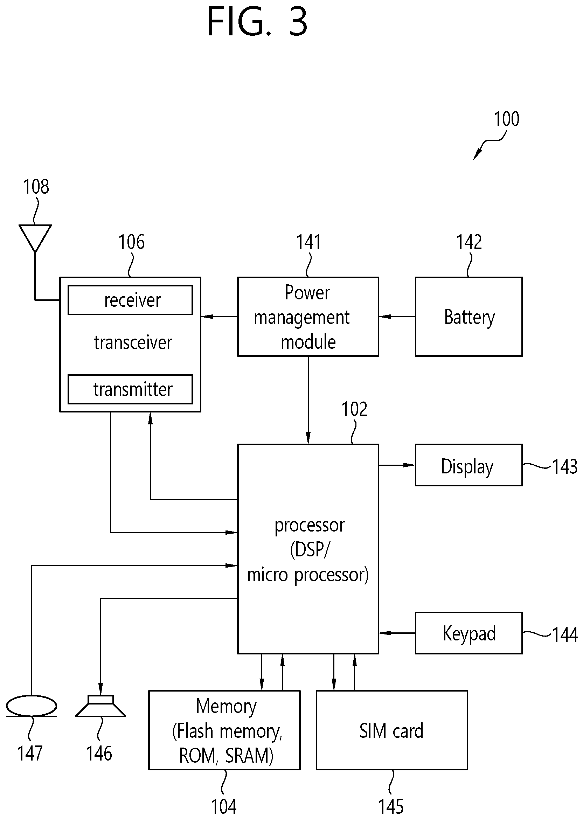

FIG. 3 shows an example of a wireless device to which implementations of the present disclosure is applied.

The wireless device may be implemented in various forms according to a use-case/service (refer to FIG. 1).

Referring to FIG. 3, wireless devices 100 and 200 may correspond to the wireless devices 100 and 200 of FIG. 2 and may be configured by various elements, components, units/portions, and/or modules. For example, each of the wireless devices 100 and 200 may include a communication unit 110, a control unit 120, a memory unit 130, and additional components 140. The communication unit 110 may include a communication circuit 112 and transceiver(s) 114. For example, the communication circuit 112 may include the one or more processors 102 and 202 of FIG. 2 and/or the one or more memories 104 and 204 of FIG. 2. For example, the transceiver(s) 114 may include the one or more transceivers 106 and 206 of FIG. 2 and/or the one or more antennas 108 and 208 of FIG. 2. The control unit 120 is electrically connected to the communication unit 110, the memory unit 130, and the additional components 140 and controls overall operation of each of the wireless devices 100 and 200. For example, the control unit 120 may control an electric/mechanical operation of each of the wireless devices 100 and 200 based on programs/code/commands/information stored in the memory unit 130. The control unit 120 may transmit the information stored in the memory unit 130 to the exterior (e.g., other communication devices) via the communication unit 110 through a wireless/wired interface or store, in the memory unit 130, information received through the wireless/wired interface from the exterior (e.g., other communication devices) via the communication unit 110.

The additional components 140 may be variously configured according to types of the wireless devices 100 and 200. For example, the additional components 140 may include at least one of a power unit/battery, input/output (I/O) unit (e.g., audio I/O port, video I/O port), a driving unit, and a computing unit. The wireless devices 100 and 200 may be implemented in the form of, without being limited to, the robot (100a of FIG. 1), the vehicles (100b-1 and 100b-2 of FIG. 1), the XR device (100c of FIG. 1), the hand-held device (100d of FIG. 1), the home appliance (100e of FIG. 1), the IoT device (100f of FIG. 1), a digital broadcast terminal, a hologram device, a public safety device, an MTC device, a medicine device, a FinTech device (or a finance device), a security device, a climate/environment device, the AI server/device (400 of FIG. 1), the BSs (200 of FIG. 1), a network node, etc. The wireless devices 100 and 200 may be used in a mobile or fixed place according to a use-example/service.

In FIG. 3, the entirety of the various elements, components, units/portions, and/or modules in the wireless devices 100 and 200 may be connected to each other through a wired interface or at least a part thereof may be wirelessly connected through the communication unit 110. For example, in each of the wireless devices 100 and 200, the control unit 120 and the communication unit 110 may be connected by wire and the control unit 120 and first units (e.g., 130 and 140) may be wirelessly connected through the communication unit 110. Each element, component, unit/portion, and/or module within the wireless devices 100 and 200 may further include one or more elements. For example, the control unit 120 may be configured by a set of one or more processors. As an example, the control unit 120 may be configured by a set of a communication control processor, an application processor (AP), an electronic control unit (ECU), a graphical processing unit, and a memory control processor. As another example, the memory unit 130 may be configured by a RAM, a DRAM, a ROM, a flash memory, a volatile memory, a non-volatile memory, and/or a combination thereof.

### <Operating bands of NR>.

The operating bands in NR are as follows

The operating bands in Table 3 below are the refarmed operating bands from the operating bands of LTE/LTE-A. This is referred to as the FR1 band.

**[Table 3]**

| NR operating bands | Uplink (UL) operating band | Downlink(DL) operating band | Duplex Mode |
|---|---|---|---|
| | FUL_low - FUL_high | FDL_low - FDL_high | |
| n1 | 1920 MHz - 1980 MHz | 2110 MHz - 2170 MHz | FDD |
| n2 | 1850 MHz - 1910 MHz | 1930 MHz - 1990 MHz | FDD |
| n3 | 1710 MHz - 1785 MHz | 1805 MHz - 1880 MHz | FDD |
| n5 | 824 MHz - 849 MHz | 869 MHz - 894 MHz | FDD |
| n7 | 2500 MHz - 2570 MHz | 2620 MHz - 2690 MHz | FDD |
| n8 | 880 MHz - 915 MHz | 925 MHz - 960 MHz | FDD |
| n12 | 699 MHz - 716 MHz | 729 MHz - 746 MHz | FDD |
| n20 | 832 MHz - 862 MHz | 791 MHz - 821 MHz | FDD |
| n25 | 1850 MHz - 1915 MHz | 1930 MHz - 1995 MHz | FDD |
| n28 | 703 MHz - 748 MHz | 758 MHz - 803 MHz | FDD |
| n34 | 2010 MHz - 2025 MHz | 2010 MHz - 2025 MHz | TDD |
| n38 | 2570 MHz - 2620 MHz | 2570 MHz - 2620 MHz | TDD |
| n39 | 1880 MHz - 1920 MHz | 1880 MHz - 1920 MHz | TDD |
| n40 | 2300 MHz - 2400 MHz | 2300 MHz - 2400 MHz | TDD |
| n41 | 2496 MHz - 2690 MHz | 2496 MHz - 2690 MHz | TDD |
| n50 | 1432 MHz - 1517 MHz | 1432 MHz - 1517 MHz | TDD1 |
| n51 | 1427 MHz - 1432 MHz | 1427 MHz - 1432 MHz | TDD |
| n66 | 1710 MHz - 1780 MHz | 2110 MHz - 2200 MHz | FDD |
| n70 | 1695 MHz - 1710 MHz | 1995 MHz - 2020 MHz | FDD |
| n71 | 663 MHz - 698 MHz | 617 MHz - 652 MHz | FDD |
| n74 | 1427 MHz - 1470 MHz | 1475 MHz - 1518 MHz | FDD |
| n75 | N/A | 1432 MHz - 1517 MHz | SDL |
| n76 | N/A | 1427 MHz - 1432 MHz | SDL |
| n77 | 3300 MHz - 4200 MHz | 3300 MHz - 4200 MHz | TDD |
| n78 | 3300 MHz - 3800 MHz | 3300 MHz - 3800 MHz | TDD |
| n79 | 4400 MHz - 5000 MHz | 4400 MHz - 5000 MHz | TDD |
| n80 | 1710 MHz - 1785 MHz | N/A | SUL |
| n81 | 880 MHz - 915 MHz | N/A | SUL |
| n82 | 832 MHz - 862 MHz | N/A | SUL |
| n83 | 703 MHz - 748 MHz | N/A | SUL |
| n84 | 1920 MHz - 1980 MHz | N/A | SUL |
| n86 | 1710 MHz - 1780 MHz | N/A | SUL |

The table below shows the NR operating band defined at high frequencies. This is called the FR2 band.

**[Table 4]**

| NR Operating band | Uplink (UL) operating band | Downlink(DL) operating band | Duplex Mode |
|---|---|---|---|
| | F_{UL_low} - F_{UL_high} | F_{DL_low} - F_{DL_high} | |
| n257 | 26500 MHz - 29500 MHz | 26500 MHz - 29500 MHz | TDD |
| n258 | 24250 MHz - 27500 MHz | 24250 MHz - 27500 MHz | TDD |
| n259 | 37000 MHz - 40000 MHz | 37000 MHz - 40000 MHz | TDD |
| n260 | 37000 MHz - 40000 MHz | 37000 MHz - 40000 MHz | FDD |
| n261 | 27500 MHz - 28350 MHz | 27500 MHz - 28350 MHz | FDD |

### <6G System General>

A 6G (wireless communication) system has purposes such as (i) very high data rate per device, (ii) a very large number of connected devices, (iii) global connectivity, (iv) very low latency, (v) decrease in energy consumption of battery-free IoT devices, (vi) ultra-reliable connectivity, and (vii) connected intelligence with machine learning capacity. The vision of the 6G system may include four aspects such as "intelligent connectivity", "deep connectivity", "holographic connectivity" and "ubiquitous connectivity", and the 6G system may satisfy the requirements shown in Table 4 below. That is, Table 4 shows the requirements of the 6G system.

**[Table 5]**

| | |
|---|---|
| Per device peak data rate | 1 Tbps |
| E2E latency | 1 ms |
| Maximum spectral efficiency | 100bps/Hz |
| Mobility support | Up to 1000km/hr |
| Satellite integration | Fully |
| AI | Fully |
| Autonomous vehicle | Fully |
| XR | Fully |
| Haptic Communication | Fully |

The 6G system may have key factors such as enhanced mobile broadband (eMBB), ultra-reliable low latency communications (URLLC), massive machine type communications (mMTC), AI integrated communication, tactile Internet, high throughput, high network capacity, high energy efficiency, low backhaul and access network congestion and enhanced data security.

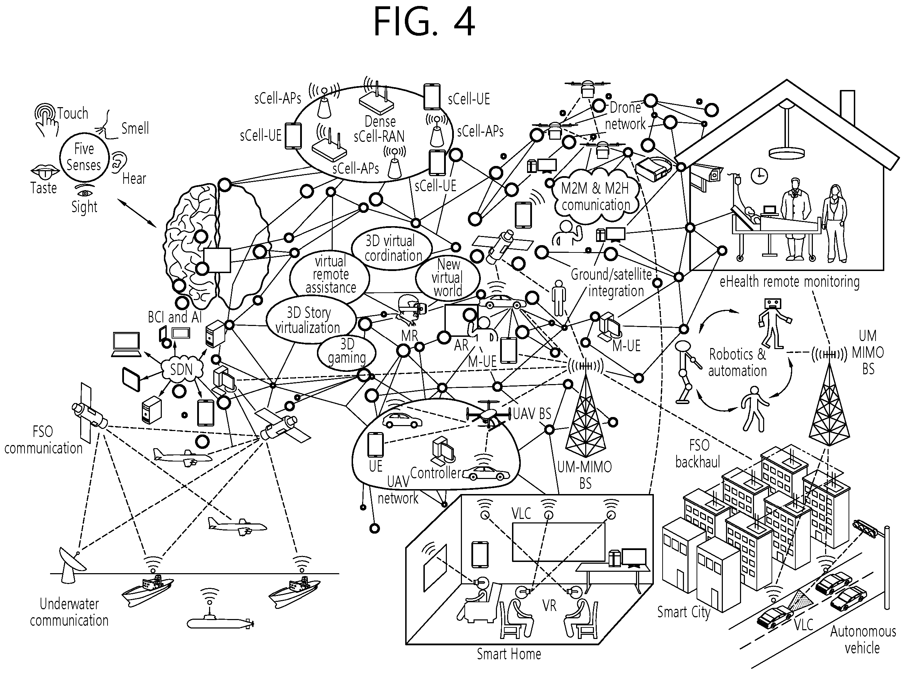

FIG. 4 is a diagram showing an example of a communication structure that can be provided in a 6G system.

The 6G system will have 50 times higher simultaneous wireless communication connectivity than a 5G wireless communication system. URLLC, which is the key feature of 5G, will become more important technology by providing end-to-end latency less than 1 ms in 6G communication. At this time, the 6G system may have much better volumetric spectrum efficiency unlike frequently used domain spectrum efficiency. The 6G system may provide advanced battery technology for energy harvesting and very long battery life and thus mobile devices may not need to be separately charged in the 6G system. In addition, in 6G, new network characteristics may be as follows.
- Satellites integrated network: To provide a global mobile group, 6G will be integrated with satellite. Integrating terrestrial waves, satellites and public networks as one wireless communication system may be very important for 6G.
- Connected intelligence: Unlike the wireless communication systems of previous generations, 6G is innovative and wireless evolution may be updated from "connected things" to "connected intelligence". AI may be applied in each step (or each signal processing procedure which will be described below) of a communication procedure.
- Seamless integration of wireless information and energy transfer: A 6G wireless network may transfer power in order to charge the batteries of devices such as smartphones and sensors. Therefore, wireless information and energy transfer (WIET) will be integrated.
- Ubiquitous super 3-dimemtion connectivity: Access to networks and core network functions of drones and very low earth orbit satellites will establish super 3D connection in 6G ubiquitous.

In the new network characteristics of 6G, several general requirements may be as follows.
- Small cell networks: The idea of a small cell network was introduced in order to improve received signal quality as a result of throughput, energy efficiency and spectrum efficiency improvement in a cellular system. As a result, the small cell network is an essential feature for 5G and beyond 5G (5GB) communication systems. Accordingly, the 6G communication system also employs the characteristics of the small cell network.
- Ultra-dense heterogeneous network: Ultra-dense heterogeneous networks will be another important characteristic of the 6G communication system. A multi-tier network composed of heterogeneous networks improves overall QoS and reduce costs.
- High-capacity backhaul: Backhaul connection is characterized by a high-capacity backhaul network in order to support high-capacity traffic. A high-speed optical fiber and free space optical (FSO) system may be a possible solution for this problem.
- Radar technology integrated with mobile technology: High-precision localization (or location-based service) through communication is one of the functions of the 6G wireless communication system. Accordingly, the radar system will be integrated with the 6G network.
- Softwarization and virtualization: Softwarization and virtualization are two important functions which are the bases of a design process in a 5GB network in order to ensure flexibility, reconfigurability and programmability.

### <Core implementation technology of 6G system>

### Artificial Intelligence

Technology which is most important in the 6G system and will be newly introduced is AI. AI was not involved in the 4G system. A 5G system will support partial or very limited AI. However, the 6G system will support AI for full automation. Advance in machine learning will create a more intelligent network for real-time communication in 6G. When AI is introduced to communication, real-time data transmission may be simplified and improved. AI may determine a method of performing complicated target tasks using countless analysis. That is, AI may increase efficiency and reduce processing delay.

Time-consuming tasks such as handover, network selection or resource scheduling may be immediately performed by using AI. AI may play an important role even in M2M, machine-to-human and human-to-machine communication. In addition, AI may be rapid communication in a brain computer interface (BCI). An AI based communication system may be supported by meta materials, intelligent structures, intelligent networks, intelligent devices, intelligent recognition radios, self-maintaining wireless networks and machine learning.

Recently, attempts have been made to integrate AI with a wireless communication system in the application layer or the network layer, but deep learning have been focused on the wireless resource management and allocation field. However, such studies are gradually developed to the MAC layer and the physical layer, and, particularly, attempts to combine deep learning in the physical layer with wireless transmission are emerging. AI-based physical layer transmission means applying a signal processing and communication mechanism based on an AI driver rather than a traditional communication framework in a fundamental signal processing and communication mechanism. For example, channel coding and decoding based on deep learning, signal estimation and detection based on deep learning, multiple input multiple output (MIMO) mechanisms based on deep learning, resource scheduling and allocation based on AI, etc. may be included.

Machine learning may be used for channel estimation and channel tracking and may be used for power allocation, interference cancellation, etc. in the physical layer of DL. In addition, machine learning may be used for antenna selection, power control, symbol detection, etc. in the MIMO system.

Machine learning refers to a series of operations to train a machine in order to create a machine which can perform tasks which cannot be performed or are difficult to be performed by people. Machine learning requires data and learning models. In machine learning, data learning methods may be roughly divided into three methods, that is, supervised learning, unsupervised learning and reinforcement learning.

Neural network learning is to minimize output error. Neural network learning refers to a process of repeatedly inputting training data to a neural network, calculating the error of the output and target of the neural network for the training data, backpropagating the error of the neural network from the output layer of the neural network to an input layer in order to reduce the error and updating the weight of each node of the neural network.

Supervised learning may use training data labeled with a correct answer and the unsupervised learning may use training data which is not labeled with a correct answer. That is, for example, in case of supervised learning for data classification, training data may be labeled with a category. The labeled training data may be input to the neural network, and the output (category) of the neural network may be compared with the label of the training data, thereby calculating the error. The calculated error is backpropagated from the neural network backward (that is, from the output layer to the input layer), and the connection weight of each node of each layer of the neural network may be updated according to backpropagation. Change in updated connection weight of each node may be determined according to the learning rate. Calculation of the neural network for input data and backpropagation of the error may configure a learning cycle (epoch). The learning data is differently applicable according to the number of repetitions of the learning cycle of the neural network. For example, in the early phase of learning of the neural network, a high learning rate may be used to increase efficiency such that the neural network rapidly ensures a certain level of performance and, in the late phase of learning, a low learning rate may be used to increase accuracy.

The learning method may vary according to the feature of data. For example, for the purpose of accurately predicting data transmitted from a transmitter in a receiver in a communication system, learning may be performed using supervised learning rather than unsupervised learning or reinforcement learning.

The learning model corresponds to the human brain and may be regarded as the most basic linear model. However, a paradigm of machine learning using a neural network structure having high complexity, such as artificial neural networks, as a learning model is referred to as deep learning.

Neural network cores used as a learning method may roughly include a deep neural network (DNN) method, a convolutional deep neural network (CNN) method, a recurrent Boltzmman machine (RNN) method and a spiking neural networks (SNN). Such a learning model is applicable.

### THz (Terahertz) Communication

A data rate may increase by increasing bandwidth. This may be performed by using sub-TH communication with wide bandwidth and applying advanced massive MIMO technology. THz waves which are known as sub-millimeter radiation, generally indicates a frequency band between 0.1 THz and 10 THz with a corresponding wavelength in a range of 0.03 mm to 3 mm. A band range of 100 GHz to 300 GHz (sub THz band) is regarded as a main part of the THz band for cellular communication. When the sub-THz band is added to the mmWave band, the 6G cellular communication capacity increases. 300 GHz to 3 THz of the defined THz band is in a far infrared (IR) frequency band. A band of 300 GHz to 3 THz is a part of an optical band but is at the border of the optical band and is just behind an RF band. Accordingly, the band of 300 GHz to 3 THz has similarity with RF.

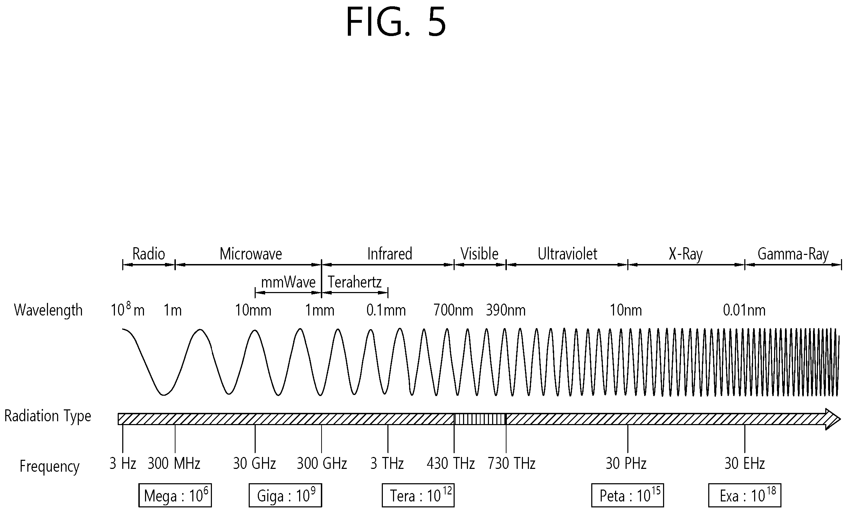

FIG. 5 shows an example of an electromagnetic spectrum.

The main characteristics of THz communication include (i) bandwidth widely available to support a very high data rate and (ii) high path loss occurring at a high frequency (a high directional antenna is indispensable). A narrow beam width generated in the high directional antenna reduces interference. The small wavelength of a THz signal allows a larger number of antenna elements to be integrated with a device and BS operating in this band. Therefore, an advanced adaptive arrangement technology capable of overcoming a range limitation may be used.

### Large-scale MIMO

One of core technologies for improving spectrum efficiency is MIMO technology. When MIMO technology is improved, spectrum efficiency is also improved. Accordingly, massive MIMO technology will be important in the 6G system. Since MIMO technology uses multiple paths, multiplexing technology and beam generation and management technology suitable for the THz band should be significantly considered such that data signals are transmitted through one or more paths.

### Hologram Beamforming

Beamforming is a signal processing procedure that adjusts an antenna array to transmit radio signals in a specific direction. This is a subset of smart antennas or advanced antenna systems. Beamforming technology has several advantages, such as high signal-to-noise ratio, interference prevention and rejection, and high network efficiency. Hologram Beamforming (HBF) is a new beamforming method that differs significantly from MIMO systems because this uses a software-defined antenna. HBF will be a very effective approach for efficient and flexible transmission and reception of signals in multi-antenna communication devices in 6G.

### Optical wireless technology

Optical wireless communication (OWC) is a form of optical communication that uses visible light, infrared light (IR), or ultraviolet light (UV) to carry signals. OWC operating in the visible light band (e.g., 390 to 750 nm) is commonly referred to as visible light communication (VLC). VLC implementations can utilize light-emitting diodes (LEDs). VLC can be used in a variety of applications, including wireless local area networks, wireless personal area networks, and vehicular networks.

VLC has several advantages over RF-based technologies. First, the spectrum occupied by VLC is free/unlicensed and can provide extensive bandwidth (THz-level bandwidth). Second, VLC rarely causes significant interference to other electromagnetic devices; therefore, VLC can be applied in sensitive electromagnetic interference applications such as aircraft and hospitals. Third, VLC has strengths in communication security and privacy. The transmission medium of VLC-based networks, namely visible light, cannot pass through walls and other opaque obstacles. Therefore, the transmission range of VLC can be limited to indoors, which can protect users' privacy and sensitive information. Fourth, VLC can use any light source as a base station, eliminating the need for expensive base stations.

Free-space optical communication (FSO) is an optical communication technology that uses light propagating in free space, such as air, outer space, and vacuum, to wirelessly transmit data for telecommunications or computer networking. FSO can be used as a point-to-point OWC system on the ground. FSO can operate in the near-infrared frequency (750-1600 nm). Laser transmitters may be used in FSO implementations, and FSO can provide high data rates (e.g., 10 Gbit/s), providing a potential solution to backhaul bottlenecks.

These OWC technologies are planned for 6G communications in addition to RF-based communications for all possible device-to-access networks. These networks will access network-to-backhaul/fronthaul network connections. OWC technology has already been in use since 4G communication systems, but will be more widely used to meet the needs of 6G communication systems. OWC technologies such as light fidelity, visible light communication, optical camera communication, and FSO communication based on optical bands are already well-known technologies. Communication based on optical wireless technology can provide extremely high data rates, low latency, and secure communication.

Light Detection And Ranging (LiDAR) is also based on the optical band and can be utilized in 6G communications for ultra-high resolution 3D mapping. LiDAR is a remote sensing method that uses near-infrared, visible, and ultraviolet light to illuminate an object, and the reflected light is detected by a light sensor to measure distance. LiDAR can be used for fully automated driving of cars.

### FSO Backhaul Network

The characteristics of the transmitter and receiver of the FSO system are similar to those of an optical fiber network. Accordingly, data transmission of the FSO system similar to that of the optical fiber system. Accordingly, FSO may be a good technology for providing backhaul connection in the 6G system along with the optical fiber network. When FSO is used, very long-distance communication is possible even at a distance of 10,000 km or more. FSO supports mass backhaul connections for remote and non-remote areas such as sea, space, underwater and isolated islands. FSO also supports cellular base station connections.

### Non-Terrestrial Networks (NTN)

The 6G system will integrate terrestrial and aerial networks to support vertically expanding user communications. 3D BS will be delivered via low-orbit satellites and UAVs. Adding a new dimension in terms of altitude and associated degrees of freedom makes 3D connectivity quite different from traditional 2D networks. NR considers Non-Terrestrial Networks (NTNs) as one way to accomplish this. An NTN is a network or network segment that uses RF resources aboard a satellite (or UAS platform). There are two common scenarios for NTNs that provide access to user equipment: transparent payloads and regenerative payloads. The following are the basic elements of an NTN.
- One or more sat-gateways that connect the NTN to the public data network.
- GEO satellites are fed by one or several satellite gateways deployed across the satellite target range (e.g., regional or continental coverage). We assume that the UEs in a cell are served by only one sat-gateway.
- Non-GEO satellites that are continuously serviced by one or multiple satellite gateways at a time. The system ensures service and feeder link continuity between successively serviced satellite gateways with a time duration sufficient to allow for mobility anchoring and handover.
- The feeder link or radio link between the satellite gateway and the satellite (or UAS platform).
- The service link or radio link between the user equipment and the satellite (or UAS platform).
- A satellite (or UAS platform) that can implement transparent or regenerative (with onboard processing) payloads. Satellite (or UAS platform) generated beams typically produce multiple beams for a given service area, depending on the field of view. The footprint of the beam is typically elliptical. The field of view of the satellite (or UAS platform) depends on the onboard antenna diagram and the minimum angle of attack.
- Transparent payload: Radio frequency filtering, frequency conversion, and amplification, so the waveform signal repeated by the payload is unchanged.
- Regenerative payload: radio frequency filtering, frequency conversion and amplification, demodulation/decryption, switching and/or routing, and coding/modulation. This is effectively the same as having all or part of the base station functions (e.g., gNB) on board a satellite (or UAS platform).
- For satellite deployments, optionally an inter-satellite link (ISL). This requires a regenerative payload on the satellite. ISLs can operate at RF frequencies or in the optical band.
- User equipment is served by satellites (or UAS platforms) within the targeted coverage area.

Typically, GEO satellites and UAS are used to provide continental, regional, or local services.

Typically, constellations in LEO and MEO are used to provide coverage in both the Northern and Southern Hemispheres. In some cases, constellations can also provide global coverage, including polar regions. The latter requires proper orbital inclination, sufficient beams generated, and links between satellites.

### Quantum Communication

Quantum communication is a next-generation communication technology that can overcome the limitations of conventional communication such as security and high-speed computation by applying quantum mechanical properties to the field of information and communication. Quantum communication provides a means of generating, transmitting, processing, and storing information that cannot be expressed in the form of 0s and 1s according to the binary bit information used in existing communication technologies. In conventional communication technologies, wavelengths or amplitudes are used to transmit information between the transmitting and receiving ends, but in quantum communication, photons, the smallest unit of light, are used to transmit information between the transmitting and receiving ends. In particular, in the case of quantum communication, quantum uncertainty and quantum irreversibility can be used for the polarization or phase difference of photons (light), so quantum communication has the characteristic of being able to communicate with perfect security. In addition, quantum communication can also enable ultra-high-speed communication using quantum entanglement under certain conditions.

### Cell-free Communication

Tight integration of multiple frequencies and heterogeneous communication technologies is critical in 6G systems. As a result, users can seamlessly move from one network to another without having to create any manual configurations on their devices. The best network is automatically selected from the available communication technologies. This will break the limitations of the cell concept in wireless communication. Currently, user movement from one cell to other causes too many handovers in dense networks, resulting in handover failures, handover delays, data loss, and ping-pong effects. 6G cell-free communication will overcome all this and provide better QoS.

Cell-free communication is defined as "a system in which a large number of geographically distributed antennas (APs) cooperatively serve a small number of terminals using the same time/frequency resources with the help of a fronthaul network and a CPU". A single terminal is served by a set of multiple APs, which is called an AP cluster. There are several ways to form AP clusters, among which the method of configuring AP clusters with APs that can significantly contribute to improving the reception performance of the terminal is called the terminal-centered clustering method, and when using this method, the configuration is dynamically updated as the terminal moves. By adopting this device-centric AP clustering technique, the device is always at the center of the AP cluster and is therefore free from inter-cluster interference that can occur when the device is located at the boundary of the AP cluster. This cell-free communication will be achieved through multi-connectivity and multi-tier hybrid technologies and different heterogeneous radios in the device.

### Integration of Wireless Information and Energy Transfer (WIET)

WIET uses the same field and wave as a wireless communication system. In particular, a sensor and a smartphone will be charged using wireless power transfer during communication. WIET is a promising technology for extending the life of battery charging wireless systems. Therefore, devices without batteries will be supported in 6G communication.

### Integration of Wireless Communication and Sensing

An autonomous wireless network is a function for continuously detecting a dynamically changing environment state and exchanging information between different nodes. In 6G, sensing will be tightly integrated with communication to support autonomous systems.

### Integrated Access and Backhaul Network

In 6G, the density of access networks will be enormous. Each access network is connected by optical fiber and backhaul connection such as FSO network. To cope with a very large number of access networks, there will be a tight integration between the access and backhaul networks.

### Big Data Analysis

Big data analysis is a complex process for analyzing various large data sets or big data. This process finds information such as hidden data, unknown correlations, and customer disposition to ensure complete data management. Big data is collected from various sources such as video, social networks, images and sensors. This technology is widely used for processing massive data in the 6G system.

### Reconfigurable Intelligent Surface

There is a large body of research that considers the radio environment as a variable to be optimized along with the transmitter and receiver. The radio environment created by this approach is referred to as a Smart Radio Environment (SRE) or Intelligent Radio Environment (IRE) to highlight its fundamental differences from past design and optimization criteria. Various terms have been proposed for the reconfigurable intelligent antenna (or intelligent reconfigurable antenna technology) technology that enables SRE, including Reconfigurable Metasurfaces, Smart Large Intelligent Surfaces (SLIS), Large Intelligent Surfaces (LIS), Reconfigurable Intelligent Surface (RIS), and Intelligent Reflecting Surface (IRS).

In the case of THz band signals, there are many shadowed areas caused by obstacles due to the strong straightness of the signal, and RIS technology is important to expand the communication area by installing RIS near these shadowed areas, strengthening communication stability and enabling additional value-added services. RIS is an artificial surface made of electromagnetic materials that can alter the propagation of incoming and outgoing radio waves. While RIS can be seen as an extension of massive MIMO, it has a different array structure and operating mechanism than massive MIMO. RIS also has the advantage of lower power consumption because it operates as a reconfigurable reflector with passive elements, meaning it only passively reflects the signal without using an active RF chain. In addition, each of the passive reflectors in the RIS must independently adjust the phase shift of the incident signal, which can be advantageous for wireless communication channels. By properly adjusting the phase shift through the RIS controller, the reflected signal can be gathered at the target receiver to boost the received signal power.

In addition to reflecting radio signals, there are also RISs that can adjust transmission and refraction properties, and these RISs are mainly used for O2I (Outdoor to Indoor). Recently, STAR-RIS (Simultaneous Transmission and Reflection RIS), which provides transmission while reflecting, has also been actively researched.

### Metaverse

Metaverse is a portmanteau of the words "meta" meaning virtual, transcendent, and "universe" meaning space. Generally speaking, the metaverse is a three-dimensional virtual space where the same social and economic activities as in the real world are commonplace.

Extended Reality (XR), a key technology enabling the Metaverse, is the fusion of the virtual and the real, which can extend the experience of reality and provide a unique sense of immersion. The high bandwidth and low latency of 6G networks will enable users to experience more immersive virtual reality (VR) and augmented reality (AR) experiences.

### Autonomous Driving, Self-driving

For perfect autonomous driving, vehicles must communicate with each other to inform each other of dangerous situations, or with infrastructure such as parking lots and traffic lights to check information such as the location of parking information and signal change times. Vehicle-to-Everything (V2X), a key element in building an autonomous driving infrastructure, is a technology that enables vehicles to communicate and share information with various elements on the road, such as vehicle-to-vehicle (V2V) and vehicle-to-infrastructure (V2I), for autonomous driving.

In order to maximize the performance of autonomous driving and ensure high safety, fast transmission speeds and low latency technologies are essential. In addition, in the future, autonomous driving will go beyond delivering warnings and guidance messages to the driver to actively intervene in vehicle operation and directly control the vehicle in dangerous situations, and the amount of information that needs to be transmitted and received will be enormous, so 6G is expected to maximize autonomous driving with faster transmission speeds and lower latency than 5G.

### Unmanned Aerial Vehicle (UAV)

An unmanned aerial vehicle (UAV) or drone will be an important factor in 6G wireless communication. In most cases, a high-speed data wireless connection is provided using UAV technology. A base station entity is installed in the UAV to provide cellular connectivity. UAVs have certain features, which are not found in fixed base station infrastructures, such as easy deployment, strong line-of-sight links, and mobility-controlled degrees of freedom. During emergencies such as natural disasters, the deployment of terrestrial telecommunications infrastructure is not economically feasible and sometimes services cannot be provided in volatile environments. The UAV can easily handle this situation. The UAV will be a new paradigm in the field of wireless communications. This technology facilitates the three basic requirements of wireless networks, such as eMBB, URLLC and mMTC. The UAV can also serve a number of purposes, such as network connectivity improvement, fire detection, disaster emergency services, security and surveillance, pollution monitoring, parking monitoring, and accident monitoring. Therefore, UAV technology is recognized as one of the most important technologies for 6G communication.

### Block-chain

A blockchain will be important technology for managing large amounts of data in future communication systems. The blockchain is a form of distributed ledger technology, and distributed ledger is a database distributed across numerous nodes or computing devices. Each node duplicates and stores the same copy of the ledger. The blockchain is managed through a peer-to-peer (P2P) network. This may exist without being managed by a centralized institution or server. Blockchain data is collected together and organized into blocks. The blocks are connected to each other and protected using encryption. The blockchain completely complements large-scale IoT through improved interoperability, security, privacy, stability and scalability. Accordingly, the blockchain technology provides several functions such as interoperability between devices, high-capacity data traceability, autonomous interaction of different IoT systems, and large-scale connection stability of 6G communication systems.

### <Random Access Channel (RACH) Procedure>

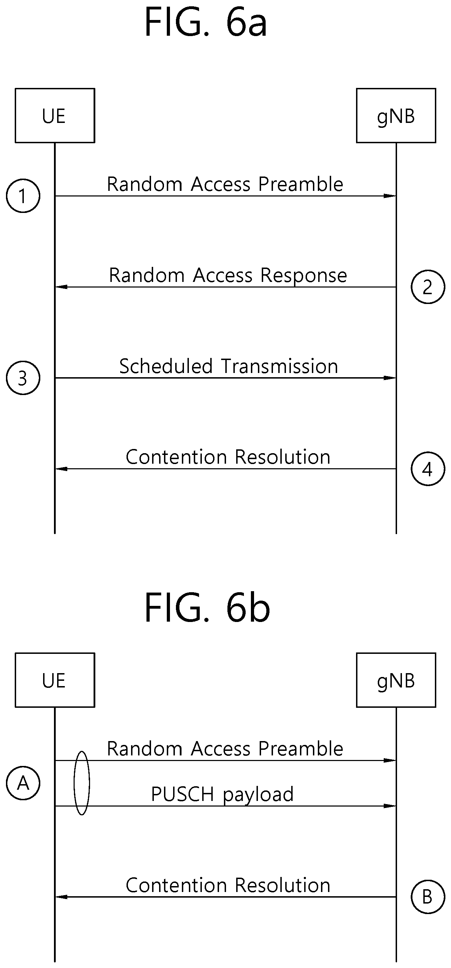

FIGS. 6a to 6e are examples of RACH procedures applicable to one embodiment of the present disclosure.

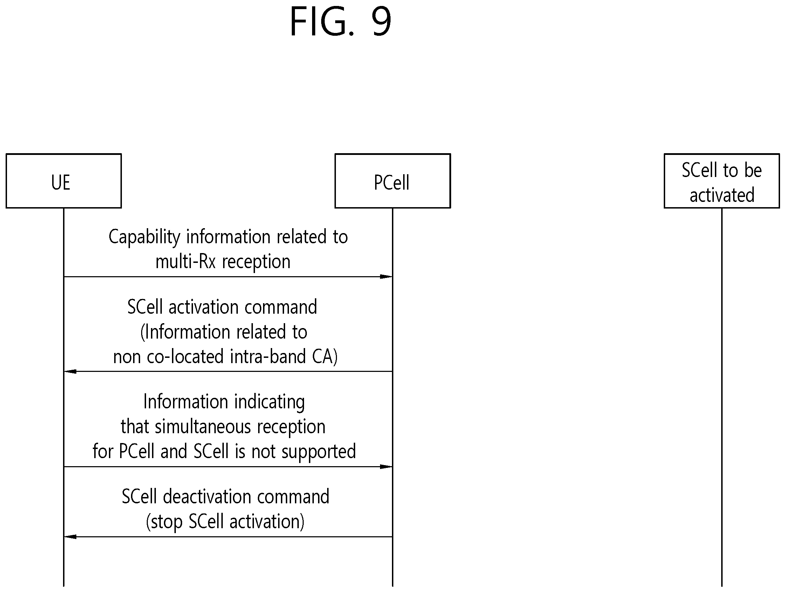

Referring to FIGS. 9a to 9e, a RACH procedure according to one embodiment of the present disclosure is described. The embodiments of FIGS. 6a to 6e may be combined with various embodiments of the present disclosure.

In one embodiment of the present disclosure, if RF requirements (e.g., Tx RF performance requirements and/or Rx RF performance requirements) are described, the UE can satisfy these RF requirements. For example, the UE can be tested to satisfy the RF requirements (e.g., Tx RF performance requirements and/or Rx RF performance requirements) according to one embodiment of the present disclosure. In the first embodiment of the present disclosure, a UE that satisfies these RF requirements can perform the RACH procedure. When the UE transmits messages, data, signals, etc. to the gNB, the UE satisfies the Tx RF performance requirements described in the first embodiment of the present disclosure. When the UE receives messages, data, signals, etc. from the gNB, the UE satisfies the Rx RF performance requirements described in Example 1 of the present disclosure.

To connect the UE to the 5G network, the UE and the 5G network must synchronize on the uplink and downlink. Downlink synchronization is performed when the UE successfully decodes the SSB sent by the gNB. To establish uplink synchronization and RRC connection, the UE must perform the RACH random access procedure.

Two types of random access procedures are supported. The two types of random access procedures include a four-step random access (RA) type using MSG1 and a two-step RA type using MSGA.

Each of the two types of RA procedures can support Contention Based Random Access (CBRA) and Non-Contention or Contention Free Random Access (CFRA), as shown in FIGS. 6a to 6e below. Depending on the network settings, the UE can select the random access type when starting the random access procedure.

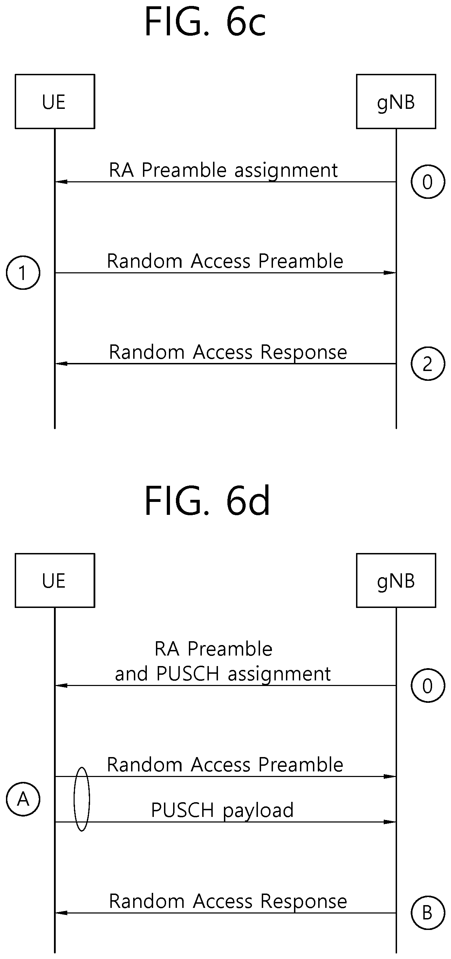

Referring to FIG.6a and FIG.6c, a four-step RA type using MSG1 is described.

The four-step RA type of MSG1 includes the preamble of the PRACH. The UE transmits MSG1. After the UE sends MSG1, the UE monitors the response of the network within the configured window.

In the case of the CBRA according to the example in FIG.6a, when the UE receives a random access response (MSG2) from the gNB, the UE may transmit MSG3 using the UL grant scheduled by the response message. And, the UE may monitor the contention resolution. If the contention resolution is not successful even after the MSG3 retransmission, the UE performs the MSG1 transmission again.

In the case of the CFRA according to the example in FIG.6c, a dedicated preamble for MSG1 transmission is allocated by the network. The gNB sends the RA preamble allocation to the UE. The UE transmits MSG1 containing the random access preamble to the gNB. Upon receiving a random access response from the network, the UE terminates the random access procedure.

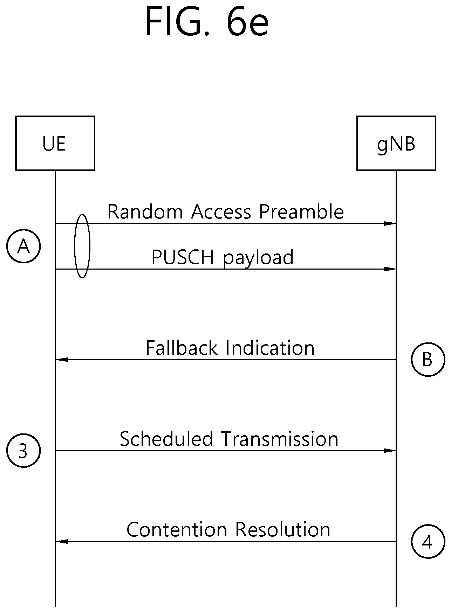

Refer to FIG.6b, FIG.6d, and FIG.6e to explain the two-step RA type. The two-step RA type MSGA includes a random access preamble and a PUSCH payload on the PRACH. After the UE transmits the MSGA, the UE monitors the response from the network within a configured window.

In the case of the CBRA according to the example in FIG.6b, after the UE has received a network response (e.g., MSGB), if the contention resolution is successful, the UE terminates the random access procedure. If a fallback indication is received within MSGB, as shown in FIG.6e, the UE performs the MSG3 transmission using the UL grant scheduled in the fallback indication and monitors the contention resolution. If the contention resolution is not successful after the (re)transmission of MSG3, the UE performs the MSGA transmission again.

In the case of CFRA according to the example in FIG.6d, the UE may receive the RA preamble allocation and PUSCH allocation from the gNB. Then, dedicated preamble and PUSCH resources may be configured for MSGA transmission. The UE transmits the MSGA. When the UE receives a network response, the UE terminates the random access procedure.

If the random access procedure of the two-step RA type is not completed even after multiple MSGA transmissions, the UE may be configured to switch to the four-step RA type CBRA.

Various examples of some procedures and technical specifications related to the disclosure of the present specification are described. For the following various examples, 3GPP standard documents may also be referred to.

In various examples of the present disclosure, communication based on intra-band carrier aggregation (CA) or intra-band dual connectivity (DC) may be performed in a high frequency band (e.g., mmWave, a frequency band of 20 GHz or higher). For example, when intra-band CA or intra-band dual connectivity (DC) is configured, each serving cell (e.g., PCell, PSCell, SCell, etc.) may be located at different locations rather than at the same location. When the serving cells are located at the same location, the serving cells may be referred to as being co-located. Conversely, when the serving cells are located at different locations, the serving cells may be referred to as being non-co-located.

In various examples described below, operations of a terminal and/or operations of a network will be described for cases in which serving cells located at different locations transmit and receive signals.

For reference, in the examples of the present disclosure, operations based on intra-band CA are assumed. However, this is merely an example, and the descriptions according to the examples of the present disclosure may be equally applied to an intra-band DC environment (e.g., a PCell and a PSCell). In addition, the descriptions according to the disclosure of the present specification may be applied to simultaneous transmission or simultaneous reception of a UE.

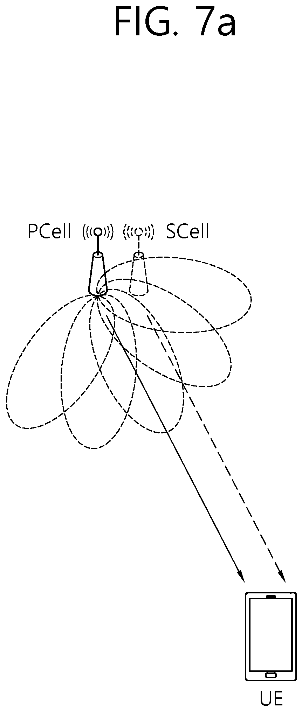

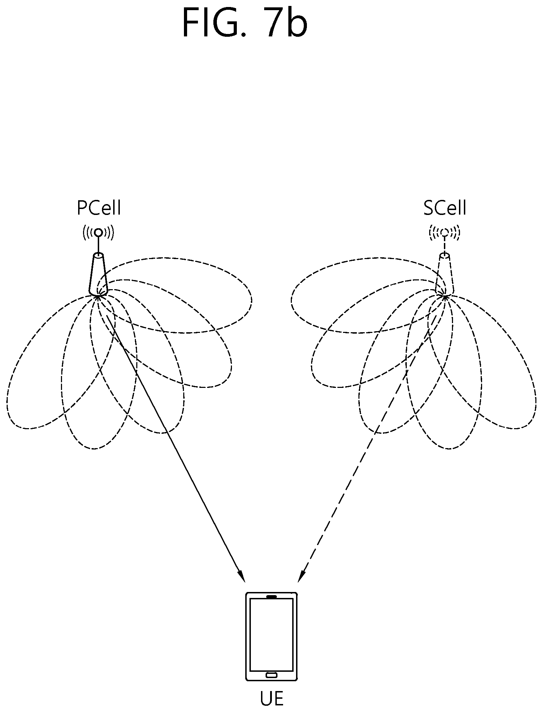

Referring to FIGS. 7a and 7b, examples of cases in which serving cells are co-located and non-co-located in intra-band CA will be described.

The following drawings are provided to describe specific examples of the present disclosure. Since specific names of apparatuses or specific names of signals/messages/fields described in the drawings are presented as examples, the technical features of the present disclosure are not limited to the specific names used in the drawings below.

FIGS. 7a and 7b illustrate examples of a co-located scenario and a non-co-located scenario of a PCell and an SCell, according to an embodiment of the present disclosure.

FIGS. 7a and 7b illustrate examples of CA operations in an mmWave frequency band. FIG. 7a is an example of intra-band CA based on co-located serving cells. FIG. 7b is an example of intra-band CA based on non-co-located serving cells.

Referring to the example of FIG. 7a, for general intra-band CA operations, it is assumed that a PCell and an SCell are located at the same location (or, co-located). For example, in the intra-band CA operation according to the prior art, only a state in which the PCell and the SCell are co-located has been considered, as in the example of FIG. 7a. In the example of FIG. 7a, when the PCell and the SCell located at the same location transmit signals, respectively, a terminal may receive the signals transmitted from the PCell and the SCell in the mmWave band using a single reception (Rx) beam.

However, when the PCell and the SCell are at different locations (non-co-located), a problem occurs in which the terminal cannot receive signals to be transmitted by the PCell and the SCell using a single reception (Rx) beam. The prior art has not supported the UE in performing communication in such a situation.

That is, as in the example of FIG. 7b, the PCell and the SCell may be located at different locations. In this case, even if intra-band CA based on the PCell and the SCell is configured for the termianl, a problem occurs in which the terminal cannot receive signals to be transmitted by the PCell and the SCell using a single reception (Rx) beam.

Meanwhile, a terminal may support a simultaneous transmission and reception capability based on multiple reception (Rx) chains (e.g., a capability of simultaneous reception/transmission with different QCL TypeD signals). In this case, in a situation where the PCell and the SCell are non-co-located, the terminal may simultaneously receive or transmit signals from or to the PCell and the SCell. For example, in a situation where the PCell and the SCell are non-co-located, a terminal supporting the simultaneous transmission and reception capability based on multiple Rx chains (e.g., a capability of simultaneous reception/transmission with different QCL TypeD signals) may simultaneously receive signals from the PCell and the SCell.

The PCell may instruct the terminal to configure an SCell by transmitting information related to addition/activation for the SCell. The terminal may report a simultaneous reception capability based on multiple reception (Rx) chains to the PCell. In this case, the PCell may instruct the terminal to perform addition/activation for a non-co-located SCell (e.g., by transmitting an RRCConnectionReconfiguration message).

The PCell may provide the terminal with information on whether the SCell is co-located or non-co-located. The corresponding information may be configured as a 1-bit indication. Additionally, the PCell may transmit a transmission timing error range (e.g., 260 ns, 3 µs, etc.) between the PCell and the SCell to the terminal.

The PCell may transmit information related to addition/activation for a non-co-located SCell to the terminal. In this case, the PCell may request the terminal for information on a beam pair capable of simultaneously receiving a signal of the PCell and a signal of the SCell. Then, the terminal may find a beam pair capable of simultaneously receiving the signal of the PCell and the signal of the SCell. The terminal may report information related to transmission (Tx) beams of the PCell and the SCell for the corresponding beam pair (e.g., a Tx beam index, channel state information (CSI), SINR, etc.) to the PCell.

Specifically, a terminal (e.g., a UE), a PCell, and/or an SCell may perform operations as in the following examples.
- A PCell may instruct a terminal to perform addition/activation of an SCell. In this case, interruption for a serving cell may be allowed during an RRC reconfiguration procedure or activation of the SCell (e.g., center frequency switching).
- The SCell may be a non-co-located SCell. In this case, when the PCell instructs a terminal to perform addition/activation for the SCell, the PCell may request the terminal for information on a beam pair capable of simultaneous reception.

Hereinafter, according to whether a UE determines that the SCell to be added/activated is known and whether the UE is capable of simultaneously receiving a signal of the SCell and a signal of the PCell, specific examples of operations as described below may be performed.

A UE may be aware of the SCell to be added/activated.

For example, before the PCell instructs SCell addition/activation, a terminal may have been performing RRM measurement (e.g., sync detection, RSRP measurement, etc.) for the corresponding SCell. In this case, the network may determine that the UE knows the SCell to be added/activated. For example, knowing or not knowing the SCell to be activated may mean, from a network perspective, whether the UE knows the SCell that the network instructs to activate.

For example, that the UE knows the SCell to be activated may mean a case where the following conditions are satisfied. If the following conditions are not satisfied, the UE may be considered not to know the SCell. If the following conditions are satisfied, it may be stated that the "SCell is known":
- i) The UE may receive an activation command for a semi-persistent CSI-RS for a PDCCH TCI, a PDSCH TCI (if applicable), and a CQI report (if applicable). During a specific period before the time point when the UE receives such a latest activation command, the following should be satisfied. Here, the specific period is 4 seconds for a UE supporting power class 1 or 5, and 3 seconds for a UE supporting power class 2, 3, or 4:
- i-1) The UE has transmitted a valid L3-RSRP measurement report including an SSB index; and
- i-2) The SCell activation command is received after the L3-RSRP report and no later than a time point when the UE receives a MAC-CE command for TCI activation.
- ii) During a period from a time point of the L3-RSRP report to a time point of a valid CQI report, the reported SSB with an index is continuously detectable according to cell identification conditions specified in sections 9.2 and 9.3 of TS 38.133 V18.1.0, and a TCI state is selected based on one of the most recently reported SSB indices.

Hereinafter, specific examples will be described with reference to "1) a case where a UE knows an SCell to be added/activated" and "2) a case where the UE does not know the SCell to be added/activated."

### 1) A case where a UE knows an SCell to be added/activated

A UE may be aware of the SCell to be added/activated.

1-A) Based on SCell measurement, a terminal may determine whether it is capable of receiving a signal of a PCell and a signal of an SCell through different reception (Rx) antenna chains. The terminal may report whether it is capable of receiving the signal of the PCell and the signal of the SCell through different Rx antenna chains to the PCell. For example, the terminal may report whether it is capable of simultaneously receiving the signals of the PCell and the SCell by forming reception beams based on different Rx antenna chains to the PCell.

For example, a terminal may determine whether it is capable of simultaneously receiving a signal of a PCell and a signal of an SCell as in the following example. For example, the terminal may simultaneously measure signal strengths of reference signals (e.g., SSB or CSI-RS) transmitted from the PCell and the SCell, and make a determination based on whether there is a beam pair (e.g., Tx beams of the PCell and the SCell) having a signal strength greater than or equal to a certain level. For example, even if a beam pair based on two beams-a beam for receiving the PCell signal and a beam for receiving the SCell signal-is possible from a perspective of the terminal, if the signal strength of one beam is excessively weaker than that of the other, problems may occur in transmission performance and reception performance from the perspective of the terminal. Accordingly, the signal strengths of the beams included in the beam pair may need to be greater than or equal to a certain signal strength.

As another example, even in a case where a terminal is capable of simultaneously receiving the signal of the PCell and the signal of the SCell with a single reception beam, the terminal may determine that simultaneous reception is possible. In this case, the terminal may report that simultaneous reception is possible.

Within a certain time (e.g., x msec; x=5) after the PCell instructs SCell addition/activation, the terminal may report information on whether it is capable of simultaneously receiving the signal of the PCell and the signal of the SCell to the PCell.

### 1-A-1) A case where simultaneous reception is possible

In a case where a terminal knows an SCell to be added/activated and is capable of simultaneously receiving a signal of the SCell and a signal of a PCell, the following description may be applied.
- There may be no constraints related to signal transmission and reception between a terminal and a PCell. That is, there is no scheduling restriction between the terminal and the PCell. The terminal may perform a beam management operation with an SCell through L1 RSRP measurement for the SCell. For example, antenna panel 1 of the terminal may form a reception/transmission beam for the PCell, and antenna panel 2 of the terminal may perform reception beam management for the SCell. That is, the terminal may independently perform L1 RSRP measurement for the SCell using another reception chain (i.e., Rx beam) while maintaining signal transmission and reception with the PCell using one reception chain (i.e., Rx beam).
- The terminal may perform beam management (L1 RSRP measurement and reporting) with the SCell. The terminal may report information related to a beam pair capable of simultaneous reception of the signal of the PCell and the signal of the SCell, to the PCell.

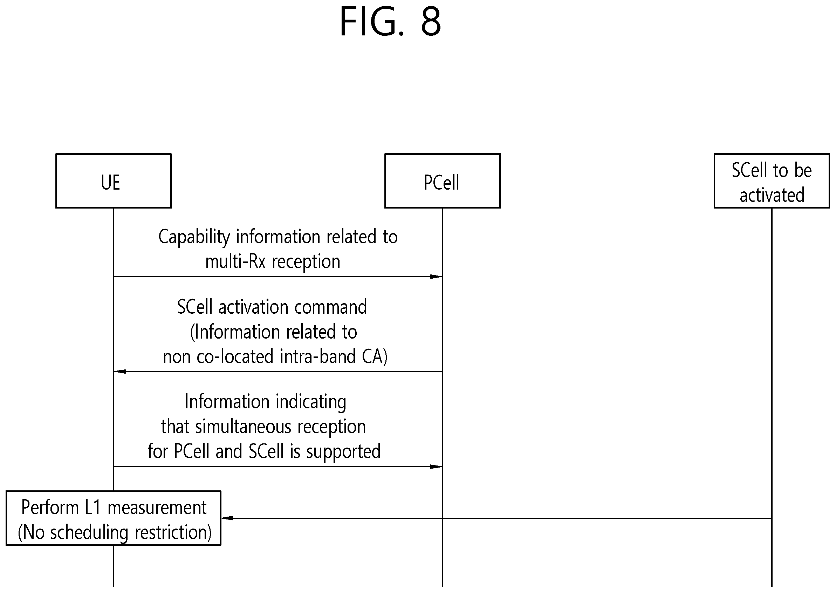

Hereinafter, an example of a procedure for "1-A-1) A case where simultaneous reception is possible" will be described with reference to an example of FIG. 8.

The following drawings are prepared to describe specific examples of the present specification. Since specific names of devices or specific names of signals/messages/fields described in the drawings are presented by way of example, the technical features of the present specification are not limited to the specific names used in the following drawings.

FIG. 8 is a first example of a procedure according to an embodiment of the disclosure of the present specification.

FIG. 8 is an example of activating a known SCell in a case where a UE is capable of simultaneously receiving a PCell signal and an SCell signal.

For example, the UE may transmit capability information related to multi-Rx reception to a PCell.

For example, a PCell may transmit an SCell activation command to the UE. The SCell activation command may include information related to non-co-located intra-band CA. The information related to the non-co-located intra-band CA may include information related to an SCell that is non-co-located with the PCell and intra-band CA configuration information.

For example, the UE may determine whether it is capable of simultaneously receiving a signal of a PCell and a signal of an SCell. For example, the UE may transmit information indicating that simultaneous reception for the PCell and the SCell is possible to the PCell.

Since the UE is capable of simultaneously receiving a PCell and an SCell, scheduling restrictions are not applied. For example, while the UE performs L1 measurement for the SCell, communication between the UE and the PCell may also be performed without scheduling restrictions.

1-A-2) A case where simultaneous reception is impossible.

In a case where a UE knows an SCell to be added/activated and the terminal is not capable of simultaneously receiving a signal of the SCell and a signal of a PCell, the following description may be applied.
- The terminal may report an indication that simultaneous reception of a PCell signal and an SCell signal is not possible to a PCell. For example, the terminal may transmit an SCell L3 measurement report including a lowest value or an infinity value to the PCell. In this case, the PCell may release/deactivate addition/activation for the corresponding SCell. In addition, when simultaneous reception for the PCell and the SCell becomes possible through RRM measurement (periodic or aperiodic measurement) for the corresponding SCell, the terminal may report corresponding information to the PCell.

The following drawings are prepared to describe specific examples of the present specification. Since specific names of devices or specific names of signals/messages/fields described in the drawings are presented by way of example, the technical features of the present specification are not limited to the specific names used in the following drawings.

FIG. 9 is a second example of a procedure according to an embodiment of the disclosure of the present specification.

FIG. 9 is an example related to activation of a known SCell in a case where a UE is not capable of simultaneously receiving a PCell signal and an SCell signal.

For example, a UE may transmit capability information related to multi-Rx reception to a PCell.

For example, a PCell may transmit an SCell activation command to a UE. The SCell activation command may include information related to non-co-located intra-band CA. The information related to the non-co-located intra-band CA may include information related to an SCell that is non-co-located with the PCell and intra-band CA configuration information.

For example, a UE may determine whether the UE is capable of simultaneously receiving a signal of a PCell and a signal of an SCell. In an example of FIG. 9, the UE may determine that it is not capable of simultaneously receiving the signal of the PCell and the signal of the SCell. In this case, the UE may transmit information indicating that simultaneous reception for the PCell and the SCell is not possible to the PCell. For example, this information may be an SCell L3 measurement report including a lowest value or an infinity value. For example, the UE may report a NACK for simultaneous reception for the PCell and the SCell to the PCell.

Since a UE is not capable of simultaneously receiving a PCell and an SCell, the PCell may transmit an SCell deactivation command to the UE. The SCell deactivation command may include information for stopping SCell activation.

2) A case where a UE does not know an SCell to be added/activated.

The UE may not know an SCell to be added/activated.

For example, a terminal may not have performed RRM measurement (e.g., sync detection, RSRP measurement, etc.) for a corresponding SCell before a PCell indicates SCell addition/activation. Alternatively, the terminal may not have reported the RRM measurement for the SCell for a certain period of time. In such a case, it may be said that a UE does not know the SCell to be added/activated.

Alternatively, in a case where conditions related to the aforementioned UE knowing an SCell to be activated are not satisfied, it may be said that the UE does not know the SCell to be added/activated.

2-A) A terminal may perform L3 measurement (e.g., cell synchronization detection, measurement, time/frequency estimation, etc.) for an SCell. During a time while the L3 measurement is performed, transmission/reception restrictions between the terminal and a PCell may occur. For example, while the L3 measurement is performed, scheduling restrictions between the terminal and the PCell may be applied. For example, a UE does not expect signal transmission/reception with the PCell while performing the L3 measurement for the SCell.

2-B) A terminal may determine whether the terminal is capable of receiving a signal of a PCell and a signal of an SCell through different reception antenna chains based on SCell measurement. That is, the terminal may determine whether it is capable of simultaneously receiving the signals of the PCell and the SCell by forming reception beams based on different reception antenna chains. For example, the terminal may report information on whether it is capable of receiving the signal of the PCell and the signal of the SCell through different reception antenna chains to the PCell. For example, the terminal may report whether it is capable of simultaneously receiving the signal of the PCell and the signal of the SCell by forming reception beams based on different reception antenna chains to the PCell.

2-B-1) A case where simultaneous reception is possible

In a case where a terminal does not know an SCell to be added/activated and simultaneous reception of a signal of the SCell and a signal of a PCell is possible, the following description may be applied.
- There may be no restriction related to signal transmission/reception between a terminal and a PCell. That is, there is no scheduling restriction between the terminal and the PCell. The terminal may perform a beam management operation with an SCell through L1 RSRP measurement for the SCell. For example, an antenna panel 1 of the terminal may form a reception/transmission beam for the PCell, and an antenna panel 2 of the terminal may perform reception beam management for the SCell. That is, the terminal may independently perform the L1 RSRP measurement for the SCell with another reception chain (i.e., Rx beam) while maintaining signal transmission/reception with the PCell with one reception chain (i.e., Rx beam).
- A terminal may perform beam management (L1 RSRP measurement and reporting) with an SCell. The terminal may report beam pair information, in which simultaneous reception of a signal of a PCell and a signal of the SCell is possible, to the PCell.

The following drawings are created to describe a specific example of the present disclosure. Since specific names of devices or specific names of signals/messages/fields described in the drawings are presented by way of example, the technical features of the present disclosure are not limited to the specific names used in the following drawings.

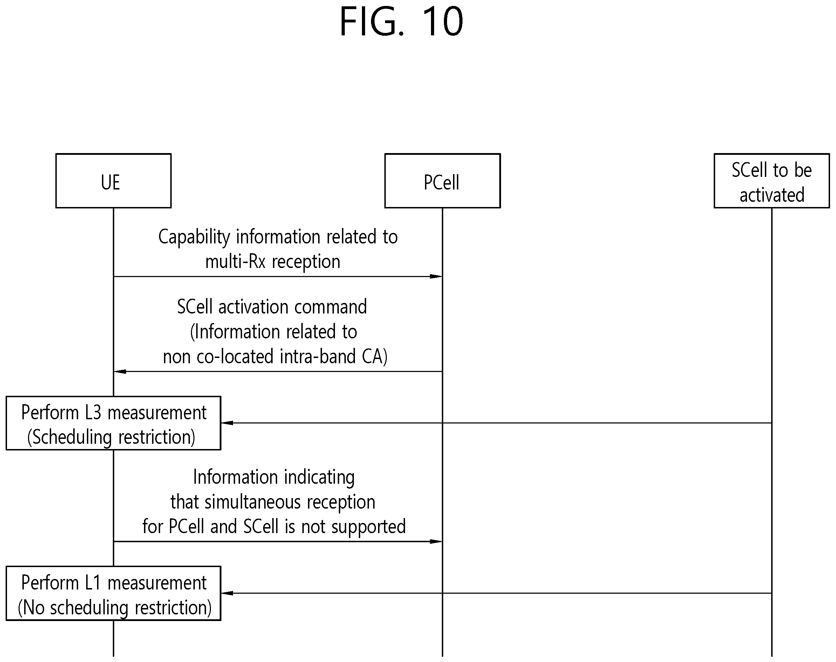

FIG. 10 is a third example of a procedure according to an embodiment of the present disclosure.

FIG. 10 is an example of a procedure for activating an unknown SCell in a case where a UE is capable of simultaneously receiving a PCell signal and an SCell signal.

For example, a UE may transmit capability information related to multi-Rx reception to a PCell.

For example, a PCell may transmit an SCell activation command to the UE. The SCell activation command may include information related to non-co-located intra-band CA. The information related to the non-co-located intra-band CA may include information related to an SCell that is non-co-located with the PCell and intra-band CA configuration information.

For example, the UE may perform L3 measurement for an SCell. While the L3 measurement is performed, scheduling restrictions may occur. For example, during a time while the L3 measurement is performed, the UE does not expect signal transmission/reception with the PCell.

For example, the UE may determine whether the UE is capable of simultaneously receiving a signal of a PCell and a signal of an SCell based on L3 measurement. For example, the UE may transmit information indicating that simultaneous reception for the PCell and the SCell is possible to the PCell.

Since a UE is capable of simultaneous reception for the PCell and the SCell, scheduling restrictions are not applied. For example, while the UE performs L1 measurement for the SCell, communication between the UE and the PCell may also be performed without scheduling restrictions.

2-B-2) A case where simultaneous reception is possible

In a case where a terminal does not know an SCell to be added/activated and simultaneous reception of a signal of the SCell and a signal of a PCell is impossible, the following description may be applied.
- The terminal may report an indication that simultaneous reception of a PCell signal and an SCell signal is impossible to the PCell. For example, the terminal may transmit an SCell L3 measurement report including a lowest value or an infinity value to the PCell. In this case, the PCell may release/deactivate addition/activation for the SCell. Additionally, when simultaneous reception for the PCell and the SCell becomes possible through RRM measurement (periodic or aperiodic measurement) for the SCell, the terminal may report corresponding information to the PCell.

The following drawings are created to describe a specific example of the present disclosure. Since specific names of devices or specific names of signals/messages/fields described in the drawings are presented by way of example, the technical features of the present disclosure are not limited to the specific names used in the following drawings.

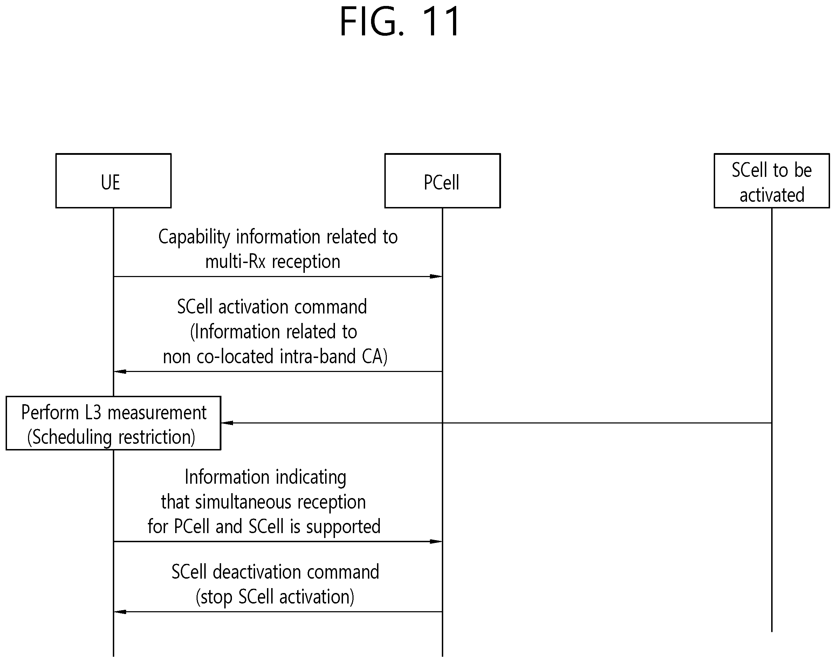

FIG. 11 is a fourth example of a procedure according to an embodiment of the present disclosure.

FIG. 11 is an example of a procedure for activating an unknown SCell in a case where a UE is incapable of simultaneously receiving a PCell signal and an SCell signal.

For example, a UE may transmit capability information related to multi-reception (e.g., Multi-Rx) to a PCell.

For example, a PCell may transmit an SCell activation command to the UE. The SCell activation command may include information related to non-co-located intra-band CA. The information related to the non-co-located intra-band CA may include information related to an SCell that is non-co-located with the PCell and intra-band CA configuration information.

For example, the UE may perform L3 measurement for an SCell. While the L3 measurement is performed, scheduling restrictions may occur. For example, during a time while the L3 measurement is performed, the UE does not expect signal transmission/reception with a PCell.

For example, the UE may determine whether it is capable of simultaneously receiving a PCell signal and an SCell signal based on L3 measurement. In the example of FIG. 11, the UE may determine that it is incapable of simultaneously receiving the PCell signal and the SCell signal. In this case, the UE may transmit information indicating that simultaneous reception for the PCell and the SCell is impossible to the PCell. For example, the information may be an SCell L3 measurement report including a lowest value or an infinity value. For example, the UE may report a NACK for the simultaneous reception of the PCell and the SCell to the PCell.

Since the UE is incapable of simultaneous reception for the PCell and SCell, the PCell may transmit an SCell deactivation command to the UE. The SCell deactivation command may include information for stopping SCell activation.

After receiving a non-co-located SCell addition/activation command, a terminal may complete SCell addition/activation within a time period including a time for performing the operations described above (e.g., operations according to 1, 1-A, 1-A-1, or operations according to 2, 2-A, 2-B, 2-B-1).

After performing an operation according to '1) a case where a UE knows an SCell to be added/activated' and/or '2) a case where the UE does not know an SCell to be added/activated', a terminal may perform the following operation. For example, based on L1 measurement, the UE may re-determine whether it is capable of simultaneously receiving a PCell signal and an SCell signal. The UE may report whether it is capable of simultaneously receiving the PCell signal and the SCell signal to the PCell. In this case, based on the report of the UE, the PCell may release/deactivate addition/activation for the corresponding SCell. Alternatively, when simultaneous reception for the PCell and the SCell becomes possible through L1 measurement (periodic or aperiodic) for the corresponding SCell, the terminal may report information indicating that the simultaneous reception is possible to the PCell.

In various embodiments of the present disclosure, a PCell may instruct a terminal to pre-perform measurement for a corresponding SCell before instructing the terminal to perform SCell addition/activation for non-co-located SCell addition/activation. In this case, when the terminal reports the measurement for the SCell to the PCell, the terminal may also report whether the terminal is capable of simultaneously receiving a signal of the PCell and a signal of the SCell. The PCell may instruct the addition/activation for the corresponding SCell only for a case where simultaneous reception is possible. In this case, the operation of 1-A-1 described above may be performed.

For example, when a terminal determines whether it is capable of simultaneously receiving a PCell signal and an SCell signal, the terminal may consider one or more of the following examples. For example, based on one or more of the following examples, the terminal may determine whether it is capable of simultaneously receiving the PCell signal and the SCell signal. That is, based on one or more of the following examples, the terminal may transmit information related to a beam pair capable of simultaneous reception to the PCell. For example, the terminal may determine whether the terminal is capable of simultaneously receiving the PCell signal and the SCell signal based on a reception power difference between two signals (e.g., possible when the difference is 6 dB or less), a reception timing difference between two signals (e.g., possible when the difference is smaller than a CP length), whether two signals are receivable through reception beam operation of different antenna panels, or whether two signals are receivable through one reception beam.

For reference, in the present disclosure, L1 measurement may mean layer 1 measurement. L3 measurement may mean layer 3 measurement.

Even in a process in which a terminal is simultaneously receiving a PCell signal and an SCell signal, the terminal may periodically or aperiodically report beam pair information for which simultaneous reception is possible.

When a terminal determines a case where simultaneous reception is impossible due to movement of the terminal or a surrounding environment, the terminal may request a single carrier fallback (i.e., a transmission/reception operation only in a PCell) to the PCell. When the single carrier fallback is transmitted, the PCell may configure the terminal to perform only transmission/reception with the PCell. Alternatively, when the terminal reports beam pair information, the terminal may report infinity or null for a value/information on an SCell, and the PCell may request the terminal to fall back to a single carrier.

For reference, in the examples of FIG. 8 to FIG. 11, capability information related to multi-reception (e.g., Multi-Rx) may mean a simultaneous transmission/reception capability based on multiple reception chains. For example, the capability information may be a capability related to simultaneous reception/transmission of different Quasi Co-Located (QCL) Type D signals.

The following drawings are created to describe a specific example of the present disclosure. Since specific names of devices or specific names of signals/messages/fields described in the drawings are presented by way of example, the technical features of the present disclosure are not limited to the specific names used in the following drawings.

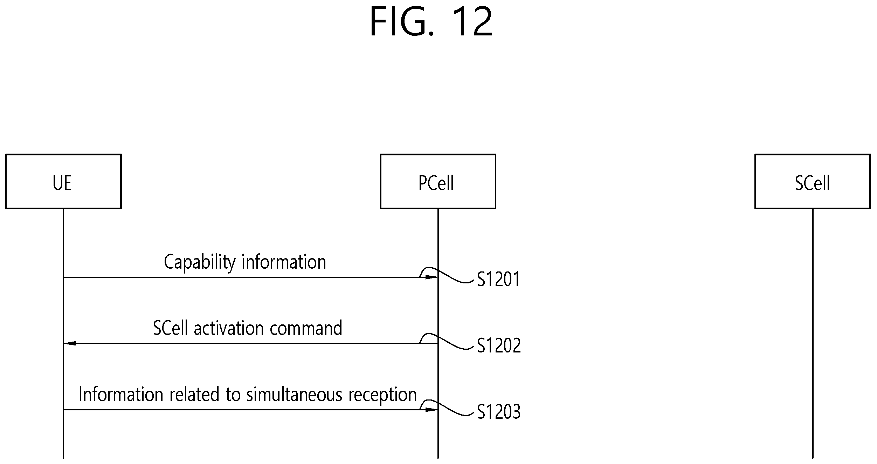

FIG. 12 is an example of a procedure according to an embodiment of the present disclosure.

FIG. 12 is an example of the present disclosure. The scope of the present disclosure is not limited by the procedure shown in FIG. 12. For example, for the example of FIG. 12, operations, contents, and the like described in various examples of the present disclosure above may be applied.

Before a step S1201 is performed, a UE may perform the random access procedure described in the examples of FIG. 6a to FIG. 6e. For example, the UE may transmit a random access preamble to a PCell. The PCell may transmit a response message to the UE.

In a step S1201, the UE may transmit capability information to the PCell.

In the example of FIG. 12, the PCell may also be referred to as a serving cell. Based on intra-band CA configuration, when both the SCell and the PCell perform communication with the UE, both the PCell and the SCell may become serving cells.

For example, the capability information may be capability information indicating that simultaneous reception and transmission are possible.

For example, the capability information may indicate that simultaneous reception and transmission based on multiple reception chains are possible.

For example, the capability information may indicate that simultaneous reception and transmission of different Quasi Co-Located (QCL) Type D signals are possible.

In a step S1202, a PCell may transmit an SCell activation command to the UE. The SCell activation command message may include information indicating that an SCell is non-co-located with the PCell.

An SCell activation command message may include information indicating that an SCell is non-co-located with a PCell.

For example, based on reception of the SCell activation command message, a network may determine whether an SCell is a known SCell or an unknown SCell to the UE.

For example, when an SCell is an unknown SCell, the UE may perform measurement for the SCell. In this case, the UE may perform L3 measurement for the SCell. While the measurement is performed, a scheduling restriction may be applied to communication between the UE and a PCell. For example, while the measurement is performed, the UE does not expect signal reception from and signal transmission to the PCell. Based on the measurement, the UE may determine whether it is capable of simultaneously receiving a serving cell signal and an SCell signal.

In a step S1203, the UE may transmit information related to simultaneous reception to a PCell.

For example, the UE may transmit a message including information related to whether simultaneous reception for a serving cell and an SCell is possible to a PCell.

For example, information related to whether simultaneous reception for a serving cell and an SCell is possible may be information indicating that the simultaneous reception for the serving cell and the SCell is impossible. In this case, a PCell may transmit an SCell deactivation command message to a UE. The SCell deactivation command message may include information for stopping SCell activation.

For example, information related to whether simultaneous reception for a serving cell and an SCell is possible may be information indicating that the simultaneous reception for the serving cell and the SCell is possible. In this case, a UE may perform measurement for the SCell. While the measurement is performed, there may be no scheduling restriction related to the PCell.

The present disclosure may have various effects.

For example, a non-co-located intra-band CA/DC scenario may be efficiently supported.

For example, a UE may support FR2 multiple reception antennas. Based on communication between such a UE and a network, an SCell activation time and a measurement time in a non-co-located intra-band CA/DC scenario may be reduced.

The effects that can be obtained through specific examples in the present disclosure are not limited to the effects listed above. For example, there may be various technical effects that a person having ordinary skill in the related art can understand or derive from the present disclosure. Accordingly, the specific effects of this specification are not limited to those explicitly described herein, and may include various effects that can be understood or derived from the technical features of this specification.

For reference, the operation of the terminal (e.g., UE) described in the present disclosure of the present specification may be implemented by the devices of FIGS. 1 to 3 described above. For example, the terminal (e.g., UE) may be the first device 100 or the second device 200 of FIG. 1. For example, the operation of a terminal (e.g., UE) described in the present disclosure of the present specification may be processed by one or more processors 102 or 202. The operation of the terminal described in the present disclosure of the present specification may be stored in one or more memories 104 or 204 in the form of an instruction/program (e.g., instruction and executable code) executable by the one or more processors 102 or 202. The one or more processors 102 or 202 may control the one or more memories 104 or 204 and one or more transceivers 105 or 206 and execute instructions/programs stored in the one or more memories 104 or 204 to perform the operation of a terminal (e.g., UE) described in the present disclosure of the present specification.

In addition, instructions for performing the operation of the terminal (e.g., UE) described in the present disclosure of the present specification may be stored in a non-volatile computer-readable storage medium. The storage medium may be included in the one or more memories 104 or 204. In addition, the instructions recorded in the storage medium may be executed by the one or more processors 102 or 202 to perform the operation of a terminal (e.g., UE) described in the present disclosure of the present specification.

For reference, the operations of network node (e.g., LMF, AMF, SMF, UPF, PCF, AUSF, etc.) or base station (e.g., NG-RAN, gNB, eNB, serving cell, PCell, SCell, neighboring cell, etc.) described in the present disclosure of the present specification may be implemented by the devices of FIGS. 1 to 3 which will be described below. For example, the network node or the base station may be the first device 100a or the second device 100b of FIG. 1. For example, the operation of the network node or the base station described in the present disclosure of the present specification may be processed by one or more processors 102 or 202. The operation of the network node or the base station described in the present disclosure of the present specification may be stored in one or more memories 104 or 204 in the form of an instruction/program (e.g., instruction and executable code) executable by the one or more processors 102 or 202. The one or more processors 102 or 202 may control the one or more memories 104 or 204 and one or more transceivers 106 or 206 and execute instructions/programs stored in the one or more memories 104 or 204 to perform the operation of the network node or the base station described in the present disclosure of the present specification.

In addition, the instructions for performing the operation of the NTN network described in the present disclosure of the present specification may be stored in a non-volatile (or non-transitory) computer-readable storage medium. The storage medium may be included in the one or more memories 104 or 204. In addition, the instructions recorded in the storage medium may be executed by the one or more processors 102 or 202 to perform the operation of the NTN network described in the present disclosure of the present specification.

Although preferred embodiments have been described above, the present disclosure of the present specification is not limited to such specific embodiments and thus can be modified, changed, or improved in various manners within the spirt of the present disclosure of the present specification and the scope of the clams.

Although methods are described as a series of steps or blocks based on a flowchart in the exemplary system described above, they are not limited to the order of the described steps, and some steps may occur in a different order or simultaneously with other steps as described above. In addition, those skilled in the art will understand that the steps shown in the flowchart are not exclusive, and that other steps may be included or that one or more steps of a flowchart may be deleted without affecting the scope of rights.

The claims described herein may be combined in various ways. For example, the technical features of the method claims of the present disclosure of the present specification may be combined and implemented as an apparatus, and the technical features of the apparatus claims of the present disclosure of the present specification may be combined and implemented as a method. In addition, the technical features of the method claims of the present disclosure of the present specification and the technical features of the apparatus claims may be combined and implemented as an apparatus, and the technical features of the method claims of the present disclosure and the technical features of the apparatus claims may be combined and implemented as a method. Other implementations are within the scope of the following claims.

## Claims

1. A method, comprising:
transmitting a random access preamble to a serving cell;
receiving a response message from the serving cell;
transmitting capability information, indicating that simultaneous reception and transmission are possible, to the serving cell;
receiving a Secondary Cell (SCell) activation command message from the serving cell,
wherein the SCell activation command message includes information related to that the SCell is non-co-located with the serving cell; and
transmitting a message including information related to whether simultaneous reception for the serving cell and the SCell is possible to the serving cell.

2. The method of claim 1, further comprising:
receiving an SCell deactivation command message from the PCell based on that the information related to whether the simultaneous reception for the serving cell and the SCell is possible is information indicating that the simultaneous reception for the serving cell and the SCell is impossible.

3. The method of claim 1, further comprising:
performing measurement for the SCell based on that the information related to whether the simultaneous reception for the serving cell and the SCell is possible is information indicating that the simultaneous reception for the serving cell and the SCell is possible,
wherein, while the measurement is performed, there is no scheduling restriction related to the PCell.

4. The method of claim 1, further comprising:
performing measurement for the SCell based on that the SCell is an unknown SCell;
wherein, while the measurement is performed, signal reception from and signal transmission to the PCell are not expected; and
determining whether the simultaneous reception for the serving cell and the SCell is possible based on the measurement.

5. The method of claim 1, wherein the capability information is related to that the simultaneous reception and transmission based on multiple reception chains are possible.

6. The method of claim 1, wherein the capability information is related to that simultaneous reception and transmission of different Quasi Co-Located (QCL) Type D signals are possible.

7. An apparatus, comprising:
one or more transceivers;
one or more processors; and
one or more memories storing instructions and operably connectable to the one or more processors,
wherein operations performed based on the instructions being executed by the one or more processors comprise:
transmitting a random access preamble to a serving cell;
receiving a response message from the serving cell;
transmitting capability information related to that simultaneous reception and transmission are possible, to the serving cell;
receiving a Secondary Cell (SCell) activation command message from the serving cell,
wherein the SCell activation command message includes information related to that the SCell is non-co-located with the serving cell; and
transmitting a message including information related to whether simultaneous reception for the serving cell and the SCell is possible to the serving cell.

8. The apparatus of claim 7, wherein the operations further comprise:
receiving an SCell deactivation command message from the PCell based on that the information related to whether the simultaneous reception for the serving cell and the SCell is possible is information related to that the simultaneous reception for the serving cell and the SCell is impossible.

9. The apparatus of claim 7, wherein the operations further comprise:
performing measurement for the SCell based on that the information related to whether the simultaneous reception for the serving cell and the SCell is possible is information related to that the simultaneous reception for the serving cell and the SCell is possible,
wherein, while the measurement is performed, there is no scheduling restriction related to the PCell.

10. The apparatus of claim 7, wherein the operations further comprise:
performing measurement for the SCell based on that the SCell is an unknown SCell;
wherein, while the measurement is performed, signal reception from and signal transmission to the PCell are not expected; and
determining whether the simultaneous reception for the serving cell and the SCell is possible based on the measurement.

11. The apparatus of claim 7, wherein the capability information is related to that simultaneous reception and transmission based on multiple reception chains are possible.

12. The apparatus of claim 7, wherein the capability information is related to that simultaneous reception and transmission of different Quasi Co-Located (QCL) Type D signals are possible.

13. An apparatus, comprising:
at least one processor; and
at least one memory storing instructions and operably and electrically connectable to the at least one processor,
wherein operations performed based on the instructions being executed by the at least one processor comprise:
transmitting a random access preamble to a serving cell;
receiving a response message from the serving cell;
transmitting capability information, indicating that simultaneous reception and transmission are possible, to the serving cell;
receiving a Secondary Cell (SCell) activation command message from the serving cell,
wherein the SCell activation command message includes information indicating that the SCell is non-co-located with the serving cell; and
transmitting a message including information related to whether simultaneous reception for the serving cell and the SCell is possible to the serving cell.

14. A non-transitory Computer Readable Medium (CRM) storing instructions that, based on being executed by at least one processor, perform operations comprising:
transmitting a random access preamble to a serving cell;
receiving a response message from the serving cell;
transmitting capability information, indicating that simultaneous reception and transmission are possible, to the serving cell;
receiving a Secondary Cell (SCell) activation command message from the serving cell,
wherein the SCell activation command message includes information indicating that the SCell is non-co-located with the serving cell; and
transmitting a message including information related to whether simultaneous reception for the serving cell and the SCell is possible to the serving cell.

15. A method, comprising:
receiving a random access preamble from a User Equipment (UE);
transmitting a response message to the UE;
receiving capability information related to that simultaneous reception and transmission are possible, from the UE;
transmitting a Secondary Cell (SCell) activation command message to the UE,
wherein the SCell activation command message includes information related to that the SCell is non-co-located with a serving cell; and
receiving a message including information related to whether simultaneous reception for the serving cell and the SCell is possible from the UE.

16. The method of claim 15, further comprising:
transmitting an SCell deactivation command message to the UE based on that the information related to whether the simultaneous reception for the serving cell and the SCell is possible is information related to that the simultaneous reception for the serving cell and the SCell is impossible.

17. The method of claim 16, wherein the capability information indicates that simultaneous reception and transmission of different Quasi Co-Located (QCL) Type D signals are possible.

18. An apparatus, comprising:
one or more transceivers;
one or more processors; and
one or more memories storing instructions and operably connectable to the one or more processors,
wherein operations performed based on the instructions being executed by the one or more processors comprise:
receiving a random access preamble from a User Equipment (UE);
transmitting a response message to the UE;
receiving capability information, indicating that simultaneous reception and transmission are possible, from the UE;
transmitting a Secondary Cell (SCell) activation command message to the UE,
wherein the SCell activation command message includes information indicating that the SCell is non-co-located with a serving cell; and
receiving a message including information related to whether simultaneous reception for the serving cell and the SCell is possible from the UE.
